(19) Europäisches Patentamt
European Patent Office
Office européen des brevets

(11) **EP 4 412 380 A1**

(12) **EUROPEAN PATENT APPLICATION**
published in accordance with Art. 153(4) EPC

(43) Date of publication:
**07.08.2024  Bulletin 2024/32**

(21) Application number: **22882952.9**

(22) Date of filing: **20.10.2022**

(51) International Patent Classification (IPC):
**H04W 74/08** (2024.01)

(52) Cooperative Patent Classification (CPC):
**H04W 74/00; H04W 74/08**

(86) International application number:
**PCT/CN2022/126469**

(87) International publication number:
**WO 2023/066347 (27.04.2023 Gazette 2023/17)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **22.10.2021   CN 202111235600
14.02.2022   CN 202210135342**

(71) Applicant: **Huawei Technologies Co., Ltd.
Shenzhen, Guangdong 518129 (CN)**

(72) Inventors:
• **LI, Jiaojiao
Shenzhen, Guangdong 518129 (CN)**
• **REN, Kui
Shenzhen, Guangdong 518129 (CN)**
• **YOU, Chunhua
Shenzhen, Guangdong 518129 (CN)**
• **CHANG, Junren
Shenzhen, Guangdong 518129 (CN)**
• **FAN, Qiang
Shenzhen, Guangdong 518129 (CN)**

(74) Representative: **Grünecker Patent- und
Rechtsanwälte
PartG mbB
Leopoldstraße 4
80802 München (DE)**

(54) **METHOD AND APPARATUS FOR RANDOM ACCESS**

(57)    Embodiments of this application provide a random access method and apparatus. The method includes: A network device determines a priority sequence of a plurality of features, where the priority sequence of the plurality of features is used for random access resource selection. The network device sends first indication information indicating the priority sequence of the plurality of features to a terminal device. The priority sequence of the plurality of features is configured based on the first indication information, so that flexibility of configuring the priority sequence of the plurality of features is improved.

FIG. 5

EP 4 412 380 A1

## Description

This application claims priorities to Chinese Patent Application No. 202111235600.2, filed with the China National Intellectual Property Administration on October 22, 2021 and entitled "RANDOM ACCESS METHOD AND APPARATUS", and to Chinese Patent Application No. 202210135342.9, filed with the China National Intellectual Property Administration on February 14, 2022 and entitled "RANDOM ACCESS METHOD AND APPARATUS", both of which are incorporated herein by reference in their entireties.

## TECHNICAL FIELD

This application relates to the communication field, and more specifically, to a random access method and apparatus.

## BACKGROUND

Random access is a step in a procedure in which a terminal device connects to a network. Currently, in a random access procedure, when the terminal device supports features (such as a reduced capability, small data transmission, coverage enhancement, and network slicing enhancement), the terminal device needs to consider priorities of different features when selecting a random access resource.

How to enable the terminal device to select the random access resource based on the priorities of the different features becomes an urgent problem to be resolved.

## SUMMARY

Embodiments of this application provide a random access method and apparatus. A terminal device can determine a priority sequence of a plurality of features based on received first indication information, and configure the priority sequence of the plurality of features based on the first indication information, to improve flexibility of configuring the priority sequence of the plurality of features.

According to a first aspect, a random access method is provided. The method may be performed by a network device, or may be performed by a component (such as a chip or a circuit) of the network device. This is not limited. For ease of description, the following describes an example in which the method is performed by the network device.

The random access method includes: The network device determines a priority sequence of a plurality of features, where the priority sequence of the plurality of features is used for random access resource selection. The network device sends first indication information to a terminal device, where the first indication information indicates the priority sequence of the plurality of features.

Based on the foregoing technical solution, the network device can configure the priority sequence of the plurality of features based on the first indication information, so that the terminal device can determine the priority sequence of the plurality of features based on the received first indication information. In this application, the priority sequence of the plurality of features is configured based on the first indication information, thereby improving flexibility of configuring the priority sequence of the plurality of features.

In addition, the network device configures the priority sequence of the plurality of features based on the first indication information, so that control performed by the network device on the terminal device can be further improved.

With reference to the first aspect, in some implementations of the first aspect, different features in the plurality of features meet at least one of the following: the different features correspond to different service requirements, the different features correspond to different transmission manners, the different features correspond to different device types, the different features correspond to different application scenarios, or the different features correspond to different functions.

With reference to the first aspect, in some implementations of the first aspect, the first indication information is included in a system message and/or dedicated signaling.

In a possible design, the dedicated signaling is a radio resource control (radio resource control, RRC) reconfiguration message or an RRC release (RRCRelease) message.

The first indication information can be sent to the terminal device by using the system message, or may be sent to the terminal device by using the dedicated signaling. This indicates that the first indication information may be sent in different manners, thereby improving flexibility of the solution.

With reference to the first aspect, in some implementations of the first aspect, the method further includes: The network device sends second indication information to the terminal device, where the second indication information indicates effective duration of the priority sequence of the plurality of features.

Based on the foregoing technical solution, the network device may configure the effective duration of the priority sequence of the plurality of features based on the second indication information, thereby improving duration effectiveness of the configured priority sequence of the plurality of features.

With reference to the first aspect, in some implementations of the first aspect, before that the network device sends the first indication information to a terminal device, the method further includes: The network device receives third indication information from the terminal device, and the third indication information indicates a priority sequence that is of the plurality of features and that is expected by the terminal device.

Based on the foregoing technical solution, the terminal device may report, based on the third indication information, the priority sequence that is of the plurality of features and that is expected by the terminal device. Therefore, when determining the priority sequence of the plurality of features, the network device may consider the priority sequence that is of the plurality of features and that is expected by the terminal device, so that the priority sequence that is of the plurality of features and that is determined by the network device can better meet a requirement of the terminal device.

With reference to the first aspect, in some implementations of the first aspect, that the first indication information indicates the priority sequence of the plurality of features includes: The first indication information indicates a sequence of the plurality of features, and the sequence of the plurality of features is used to determine the priority sequence of the plurality of features; or the first indication information indicates priority information of the plurality of features, the priority information includes priority information of at least one feature in the plurality of features, and the priority information is used to determine the priority sequence of the plurality of features.

Based on the foregoing technical solution, the first indication information may directly or indirectly indicate the priority sequence of the plurality of features, thereby improving flexibility of the solution.

According to a second aspect, a random access method is provided. The method may be performed by a terminal device, or may be performed by a component (such as a chip or a circuit) of the terminal device. This is not limited. For ease of description, the following describes an example in which the method is performed by the terminal device.

The random access method includes: The terminal device receives first indication information from a network device, where the first indication information indicates a priority sequence of a plurality of features. The terminal device determines the priority sequence of the plurality of features based on the first indication information, where the priority sequence of the plurality of features is used for random access resource selection.

Based on the foregoing technical solution, the terminal device can determine the priority sequence of the plurality of features based on the received first indication information. In this application, the priority sequence of the plurality of features is configured based on the first indication information, thereby improving flexibility of configuring the priority sequence of the plurality of features.

With reference to the second aspect, in some implementations of the second aspect, different features in the plurality of features meet at least one of the following: the different features correspond to different service requirements, the different features correspond to different transmission manners, the different features correspond to different device types, the different features correspond to different application scenarios, or the different features correspond to different functions.

With reference to the second aspect, in some implementations of the second aspect, the first indication information is included in a system message and/or dedicated signaling.

The first indication information can be sent to the terminal device by using the system message, or may be sent to the terminal device by using the dedicated signaling. This indicates that the first indication information may be sent in different manners, thereby improving flexibility of the solution.

With reference to the second aspect, in some implementations of the second aspect, the method further includes: The terminal device receives second indication information from the network device, where the second indication information indicates effective duration of the priority sequence of the plurality of features.

Based on the foregoing technical solution, the network device may configure the effective duration of the priority sequence of the plurality of features based on the second indication information, thereby improving duration effectiveness of the configured priority sequence of the plurality of features.

With reference to the second aspect, in some implementations of the second aspect, before that the terminal device receives first indication information from a network device, the method further includes: The terminal device sends third indication information to the network device, and the third indication information indicates a priority sequence that is of the plurality of features and that is expected by the terminal device.

Based on the foregoing technical solution, the terminal device may report, based on the third indication information, the priority sequence that is of the plurality of features and that is expected by the terminal device. Therefore, when determining the priority sequence of the plurality of features, the network device may consider the priority sequence that is of the plurality of features and that is expected by the terminal device, so that the priority sequence that is of the plurality of features and that is determined by the network device can better meet a requirement of the terminal device.

With reference to the second aspect, in some implementations of the second aspect, the method further includes: The terminal device selects the random access resource based on the first indication information.

With reference to the second aspect, in some implementations of the second aspect, the first indication information indicates that a priority of a first feature is higher than a priority of a second feature; and that the terminal device selects the random access resource based on the first indication information includes: The terminal device determines that a first resource is configured, where the first resource is a random access resource of the first feature, or the first resource is a random access resource of a first feature combination including the first feature. The terminal device determines that a second resource is configured, where the second resource is a random access resource of a second feature combination including the first feature and the second feature, and the random access resource is included in the second resource.

With reference to the second aspect, in some implementations of the second aspect, the first indication information indicates that the priority of the first feature is higher than the priority of the second feature, and the method further includes: The terminal device fails to perform random access on the second resource, and the second resource is the random access resource of the second feature combination including the first feature and the second feature. That the terminal device selects the random access resource based on the first indication information includes: The terminal device determines that the first resource is configured, where the first resource is the random access resource of the first feature, or the first resource is the random access resource of the first feature combination including the first feature, and the random access resource is included in the first resource.

With reference to the second aspect, in some implementations of the second aspect, that the first indication information indicates a priority sequence of a plurality of features includes: The first indication information indicates a sequence of the plurality of features, and the sequence of the plurality of features is used to determine the priority sequence of the plurality of features; or the first indication information indicates priority information of the plurality of features, the priority information includes priority information of at least one feature in the plurality of features, and the priority information is used to determine the priority sequence of the plurality of features.

Based on the foregoing technical solution, the first indication information may directly or indirectly indicate the priority sequence of the plurality of features, thereby improving flexibility of the solution.

According to a third aspect, a random access apparatus is provided. The apparatus is configured to perform the method provided in the first aspect. Specifically, the random access apparatus may include units and/or modules configured to perform the method provided in any one of the first aspect or the foregoing implementations of the first aspect, for example, a processing unit and/or a communication unit.

In an implementation, the random access apparatus is a network device. When the random access apparatus is the network device, the communication unit may be a transceiver or an input/output interface, and the processing unit may be at least one processor. Optionally, the transceiver may be a transceiver circuit. Optionally, the input/output interface may be an input/output circuit.

In another implementation, the random access apparatus is a chip, a chip system, or a circuit in a network device. When the random access apparatus is the chip, the chip system, or the circuit in the network device, the communication unit may be an input/output interface, an interface circuit, an output circuit, an input circuit, a pin, a related circuit, or the like on the chip, the chip system, or the circuit, and the processing unit may be at least one processor, a processing circuit, a logic circuit, or the like.

For beneficial effects of the method shown in the third aspect and the possible designs of the third aspect, refer to the beneficial effects in the first aspect and the possible designs of the first aspect.

According to a fourth aspect, a random access apparatus is provided. The random access apparatus is configured to perform the method provided in the second aspect. Specifically, the random access apparatus may include units and/or modules configured to perform the method provided in any one of the second aspect or the foregoing implementations of the second aspect, for example, a processing unit and/or a communication unit.

In an implementation, the random access apparatus is a terminal device. When the random access apparatus is the terminal device, the communication unit may be a transceiver or an input/output interface, and the processing unit may be at least one processor. Optionally, the transceiver may be a transceiver circuit. Optionally, the input/output interface may be an input/output circuit.

In another implementation, the random access apparatus is a chip, a chip system, or a circuit in a terminal device. When the random access apparatus is the chip, the chip system, or the circuit in the terminal device, the communication unit may be an input/output interface, an interface circuit, an output circuit, an input circuit, a pin, a related circuit, or the like on the chip, the chip system, or the circuit, and the processing unit may be at least one processor, a processing circuit, a logic circuit, or the like.

For beneficial effects of the method shown in the fourth aspect and the possible designs of the fourth aspect, refer to beneficial effects in the second aspect and the possible designs of the second aspect.

According to a fifth aspect, a communication apparatus is provided. The communication apparatus includes at least one processor, and the at least one processor is coupled to at least one memory. The at least one memory is configured to store a computer program or instructions. The at least one processor is configured to: invoke the computer program or the instructions from the at least one memory and run the computer program or the instructions, so that the communication apparatus performs the method in the first aspect or any possible implementation of the first aspect.

In an implementation, the apparatus is a network device.

In another implementation, the communication apparatus is a chip, a chip system, or a circuit in a network device.

For beneficial effects of the method shown in the fifth aspect and the possible designs of the fifth aspect, refer to the beneficial effects in the first aspect and the possible designs of the first aspect.

According to a sixth aspect, a communication apparatus is provided. The communication apparatus includes at least one processor, and the at least one processor is coupled to at least one memory. The at least one memory is configured to store a computer program or instructions. The at least one processor is configured to: invoke the computer program or the instructions from the at least one memory and run the computer program or the instructions, so that the communication apparatus performs the method in the second aspect or any possible implementation of the second aspect.

In an implementation, the apparatus is a terminal device.

In another implementation, the apparatus is a chip, a chip system, or a circuit in a terminal device.

For beneficial effects of the method shown in the sixth aspect and the possible designs of the sixth aspect, refer to beneficial effects in the second aspect and the possible designs of the second aspect.

According to a seventh aspect, this application provides a processor, configured to perform the method provided in each of the foregoing aspects.

Unless otherwise specified, or if operations such as sending and obtaining/receiving related to the processor do not contradict an actual function or internal logic of the operations in related descriptions, all the operations may be understood as operations such as outputting, receiving, and inputting of the processor, and may also be understood as operations such as sending and receiving performed by a radio frequency circuit and an antenna. This is not limited in this application.

According to an eighth aspect, a computer-readable storage medium is provided. The computer-readable storage medium stores program code executed by a device, and the program code includes the method provided in any one of the first aspect or the implementations of the first aspect or any one of the second aspect or the implementations of the second aspect.

According to a ninth aspect, a computer program product including instructions is provided. When the computer program product runs on a computer, the computer is enabled to perform the method provided in any one of the first aspect or the foregoing implementations of the first aspect or any one of the second aspect or the foregoing implementations of the second aspect.

According to a tenth aspect, a chip is provided. The chip includes a processor and a communication interface. The processor reads, through the communication interface, instructions stored in a memory, to perform the method provided in any one of the first aspect or the implementations of the first aspect or any one of the second aspect or the implementations of the second aspect.

Optionally, in an implementation, the chip further includes a memory, the memory stores a computer program or instructions, and the processor is configured to execute the computer program or the instructions stored in the memory. When the computer program or the instructions is/are executed, the processor is configured to perform the method provided in any one of the first aspect or the foregoing implementations of the first aspect or any one of the second aspect or the foregoing implementations of the second aspect.

According to an eleventh aspect, a communication system is provided. The communication system includes the random access apparatus shown in the third aspect and the fourth aspect.

According to a twelfth aspect, a communication method is provided. The method may be performed by a terminal device, or may be performed by a component (such as a chip or a circuit) of the terminal device. This is not limited. For ease of description, the following describes an example in which the method is performed by the terminal device.

The communication method includes: The terminal device determines a subcarrier spacing (subcarrier spacing, SCS) group to which at least one SCS belongs. The terminal device determines a smallest SCS in the SCS group. The terminal device determines radio link control (radio link control, RLC) round trip time (round trip time, RTT) corresponding to the smallest SCS, where the RLC RTT is used to determine a layer 2 buffer size. The at least one SCS includes: one or more SCSs supported in some or all frequency band combinations and an applicable feature set combination, or one or more SCSs supported in some or all frequency band combinations.

Based on the foregoing technical solution, the SCSs are grouped, so that a problem that an excessively large layer 2 buffer is caused because improper RLC RTT is used when the terminal device aggregates a high-frequency or ultra-high-frequency carrier can be avoided.

With reference to the twelfth aspect, in some implementations of the twelfth aspect, that the terminal device determines an SCS group to which at least one SCS belongs includes:

the terminal device determines, according to a protocol predefinition, the SCS group to which the at least one SCS belongs; or

the terminal device receives fifth indication information from a network device, where the fifth indication information indicates the SCS group to which the at least one SCS belongs.

Based on the foregoing technical solution, the terminal device may determine, in different manners, the SCS group to which the at least one SCS belongs, thereby improving flexibility of the solution.

With reference to the twelfth aspect, in some implementations of the twelfth aspect, the method further includes: The terminal device determines a mapping relationship between the SCS and the SCS group.

With reference to the twelfth aspect, in some implementations of the twelfth aspect, the RLC RTT and the layer 2 buffer size meet the following relationship:

$$\sum_i^N MaxDLDataRate(i) * RLCRTT(i) + MaxULDataRate(i) * RLCRTT(i)$$

N is a quantity of SCS groups. MaxDLDataRate (i) is a maximum downlink data rate supported on a frequency band or a frequency band combination of an $i^{th}$ SCS group to which an SCS belongs. MaxULDataRate (i) is a maximum uplink data rate supported on a frequency band or a frequency band combination of an $i^{th}$ SCS group to which an SCS belongs.

With reference to the twelfth aspect, in some implementations of the twelfth aspect, the RLC RTT and the layer 2 buffer size meet the following relationship:

$$\sum_i^N MaxDLDataRate * RLCRTT(i) + MaxULDataRate * RLCRTT(i)$$

N is a quantity of SCS groups. MaxDLDataRate is a maximum downlink data rate supported by the terminal device, and MaxULDataRate is a maximum uplink data rate supported by the terminal device.

According to a thirteenth aspect, a communication method is provided. The method may be performed by a network device, or may be performed by a component (such as a chip or a circuit) of the network device. This is not limited. For ease of description, the following describes an example in which the method is performed by the network device.

The communication method includes: The network device determines an SCS group to which at least one SCS belongs, where RLC RTT corresponding to a smallest SCS in the SCS group is used to determine a layer 2 buffer size. The network device sends fifth indication information to a terminal device, where the fifth indication information indicates the SCS group to which the at least one SCS belongs. The at least one SCS includes:
one or more SCSs supported in some or all frequency band combinations and an applicable feature set combination, or one or more SCSs supported in some or all frequency band combinations.

Based on the foregoing technical solution, the SCSs are grouped, so that a problem that an excessively large layer 2 buffer is caused because improper RLC RTT is used when the terminal device aggregates a high-frequency or ultra-high-frequency carrier can be avoided.

According to a fourteenth aspect, a communication apparatus is provided. The apparatus may be the terminal device in the twelfth aspect, or may be performed by the component (for example, the chip or the circuit) of the terminal device in the twelfth aspect. This is not limited herein.

The communication apparatus includes: a processing unit, configured to determine an SCS group to which at least one SCS belongs. The processing unit is configured to determine a smallest SCS in the SCS group. The processing unit is configured to determine RLC RTT corresponding to the smallest SCS, where the RLC RTT is used to determine a layer 2 buffer size. The at least one SCS includes:
one or more SCSs supported in some or all frequency band combinations and an applicable feature set combination, or one or more SCSs supported in some or all frequency band combinations.

With reference to the fourteenth aspect, in some implementations of the fourteenth aspect, that the processing unit is configured to determine an SCS group to which at least one SCS belongs includes:
the processing unit is configured to determine, according to a protocol predefinition, the SCS group to which the at least one SCS belongs.

Alternatively, the apparatus further includes a receiving unit, configured to receive fifth indication information from a network device, where the fifth indication information indicates the SCS group to which the at least one SCS belongs.

With reference to the fourteenth aspect, in some implementations of the fourteenth aspect, the processing unit is configured to determine a mapping relationship between the SCS and the SCS group.

According to a fifteenth aspect, a communication apparatus is provided. The apparatus may be the network device in the thirteenth aspect, or may be performed by the component (for example, the chip or the circuit) of the network device in the thirteenth aspect. This is not limited herein.

The communication apparatus includes: a processing unit, configured to determine an SCS group to which at least one SCS belongs, where RLC RTT corresponding to a smallest SCS in the SCS group is used to determine a layer 2 buffer size; and a sending unit, configured to send fifth indication information to a terminal device, where the fifth indication information indicates the SCS group to which the at least one SCS belongs. The at least one SCS includes: one or more SCSs supported in some or all frequency band combinations and an applicable feature set combination, or one or more SCSs supported in some or all frequency band combinations.

According to a sixteenth aspect, a computer-readable storage medium is provided. The computer-readable storage medium stores program code executed by a device, and the program code includes the method provided in any one of the twelfth aspect or the implementations of the twelfth aspect or any one of the thirteenth aspect or the implementations of the thirteenth aspect.

According to a seventeenth aspect, a computer program product including instructions is provided. When the computer program product runs on a computer, the computer is enabled to perform the method provided in any one of the twelfth aspect or the foregoing implementations of the twelfth aspect or any one of the thirteenth aspect or the foregoing implementations of the thirteenth aspect.

According to an eighteenth aspect, a chip is provided. The chip includes a processor and a communication interface. The processor reads, through the communication interface, instructions stored in a memory, to perform the method provided in any one of the twelfth aspect or the implementations of the twelfth aspect or any one of the thirteenth aspect or the implementations of the thirteenth aspect.

Optionally, in an implementation, the chip further includes a memory, the memory stores a computer program or instructions, and the processor is configured to execute the computer program or the instructions stored in the memory. When the computer program or the instructions is/are executed, the processor is configured to perform the method provided in any one of the twelfth aspect or the foregoing implementations of the twelfth aspect or any one of the thirteenth aspect or the implementations of the thirteenth aspect.

According to a nineteenth aspect, a communication system is provided. The communication system includes the communication apparatuses shown in the fourteenth aspect and the fifteenth aspect.

## BRIEF DESCRIPTION OF DRAWINGS

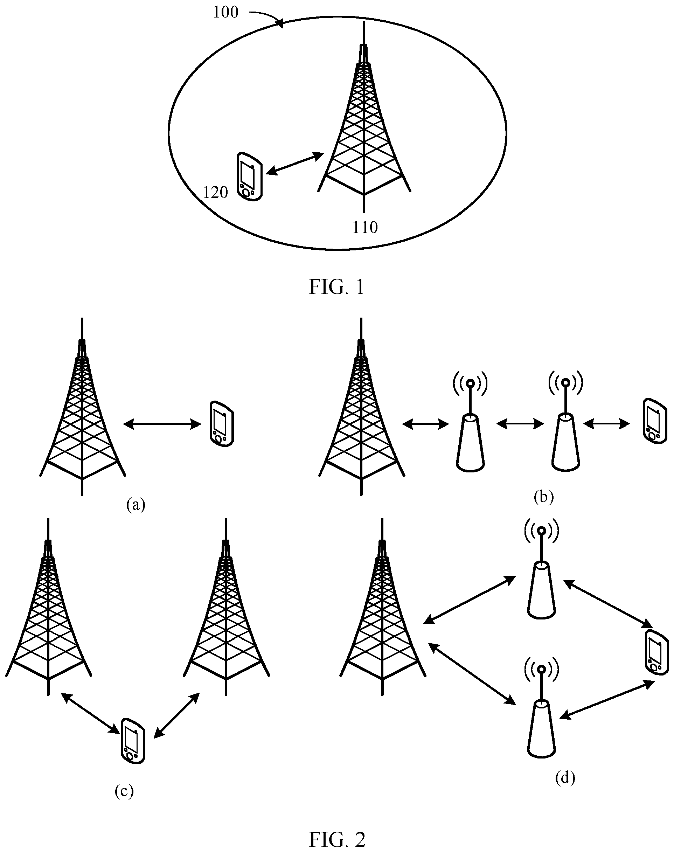

FIG. 1 is a schematic diagram of a communication system 100 to which an embodiment of this application is applicable;

(a) to (d) in FIG. 2 are schematic diagrams of a communication manner between a network device and a terminal device;

FIG. 3 is a schematic flowchart of a four-step random access procedure;

FIG. 4 is a schematic flowchart of a two-step random access procedure;

FIG. 5 is a schematic flowchart of a random access method provided in an embodiment of this application;

FIG. 6(a) to FIG. 6(d) are schematic flowcharts of selecting a random access resource by a terminal device;

FIG. 7 is another schematic flowchart of selecting a random access resource by a terminal device;

FIG. 8 is a schematic block diagram of a communication apparatus according to an embodiment of this application; and

FIG. 9 is another schematic block diagram of a communication apparatus according to an embodiment of this application.

## DESCRIPTION OF EMBODIMENTS

The following describes technical solutions of embodiments in this application with reference to accompanying drawings.

The technical solutions in embodiments of this application may be applied to various communication systems, for example, a 5th generation (5th generation, 5G) system or a new radio (new radio, NR) system, a long term evolution (long term evolution, LTE) system, an LTE frequency division duplex (frequency division duplex, FDD) system, and an LTE time division duplex (time division duplex, TDD) system. The technical solutions provided in this application may be further applied to a future communication system, for example, a 6th generation mobile communication system. The technical solutions in embodiments of this application may be further applied to device-to-device (device-to-device, D2D) communication, vehicle-to-everything (vehicle-to-everything, V2X) communication, machine-to-machine (machine-to-machine, M2M) communication, machine type communication (machine type communication, MTC), or communication in an internet of things (internet of things, IoT) communication system or another communication system.

For ease of understanding embodiments of this application, a communication system shown in FIG. 1 is first used as an example to describe in detail a communication system to which embodiments of this application are applicable. FIG. 1 is a schematic diagram of a communication system 100 to which an embodiment of this application is applicable. As shown in FIG. 1, the communication system 100 may include at least one network device, for example, a network device 110 shown in FIG. 1. The communication system 100 may further include at least one terminal device, for example, a terminal device 120 shown in FIG. 1. The network device 110 and the terminal device 120 may communicate with each other through a radio link. A plurality of antennas may be configured for each communication device, for example, the network device 110 and the terminal device 120. For each communication device in the communication system 100, the configured plurality of antennas may include at least one transmit antenna configured to send a signal and at least one receive antenna configured to receive a signal. Therefore, the communication devices in the communication system 100, for example, the network device 110 and the terminal device 120, may communicate with each other by using a multi-antenna technology.

By way of example and not limitation, the network device and the terminal device in the scenario shown in FIG. 1 may communicate in a plurality of manners, for example, the network device communicates with the terminal device in a point-to-point transmission manner, the network device communicates with the terminal device in a multi-hop (or relay (relay)) transmission manner, or a plurality of network devices communicate with the terminal device in a dual-connectivity (dual connectivity, DC) or multi-connectivity transmission manner. (a) to (d) in FIG. 2 are schematic diagrams of a communication manner between the network device and the terminal device.

(a) in FIG. 2 shows point-to-point transmission between the network device and the terminal device. (b) in FIG. 2 shows multi-hop single-connection transmission between the network device and the terminal device. (c) in FIG. 2 shows dual-connection transmission between the network device and the terminal device. (d) in FIG. 2 shows multi-hop multi-connection transmission between the network device and the terminal device.

It should be noted that FIG. 2 is merely an example, and does not constitute any limitation on the protection scope of this application. A manner of communication between the network device and the terminal device is not limited in this embodiment of this application. For example, transmission between the network device and the terminal device may be an uplink, a downlink, an access link, a backhaul (backhaul) link, a sidelink (Sidelink), or the like.

The terminal device (terminal equipment) in embodiments of this application may be an access terminal, a subscriber unit, a subscriber station, a mobile station, a mobile console, a relay station, a remote station, a remote terminal, a mobile device, a user terminal (user terminal), user equipment (user equipment, UE), a terminal (terminal), a wireless communication device, a user agent, or a user apparatus. The terminal device may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a terminal device in a future 5G network, a terminal device in a future evolved public land mobile network (public land mobile network, PLMN), or the like. This is not limited in embodiments of this application.

By way of example and not limitation, in embodiments of this application, the wearable device may alternatively be referred to as a wearable intelligent device, and is a general term of wearable devices, such as glasses, gloves, watches, clothes, and shoes, that are developed by applying wearable technologies to intelligent designs of daily wear. The wearable device is a portable device that can be directly worn on the body or integrated into clothes or an accessory of a user. The wearable device is not only a hardware device, but also implements a powerful function through software support, data exchange, and cloud interaction. Generic wearable smart devices include full-featured and large-size devices that can implement complete or partial functions without depending on smartphones, such as smart watches or smart glasses, and devices that focus only on a type of application function and need to work with other devices such as smartphones, such as various smart bands or smart jewelry for monitoring physical symptoms.

In addition, the terminal device in embodiments of this application may alternatively be a terminal device in an IoT system. IoT is an important part of future development of information technologies. A main technical feature of the IoT is connecting a thing to a network by using a communication technology, to implement an intelligent network for interconnection between a person and a machine or between things. In embodiments of this application, an IoT technology may implement massive connections, deep coverage, and terminal power saving by using, for example, a narrow band (narrow band, NB) technology.

The network device in embodiments of this application may be any communication device that has a wireless transceiver function and that is configured to communicate with a terminal device. The device includes but is not limited to an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB, HeNB, or a home NodeB, HNB), a baseband unit (baseBand unit, BBU), an access point (access point, AP) in a wireless fidelity (wireless fidelity, Wi-Fi) system, a wireless relay node, a wireless backhaul node, a transmission point (transmission point, TP), a transmission reception point (transmission and reception point, TRP), or the like. Alternatively, the device may be a gNB or a transmission point (TRP or TP) in a 5G system such as an NR system, may be one antenna panel or a group of antenna panels (including a plurality of antenna panels) of a gNB in a 5G system, or may be a network node, for example, a baseband unit (BBU) or a distributed unit (distributed unit, DU), that constitutes a gNB or a transmission point.

In some deployments, a gNB may include a central unit (central unit, CU) and a DU. The gNB may further include an active antenna unit (active antenna unit, AAU). The CU performs some functions of the gNB, and the DU performs some functions of the gNB. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a media access control (media access control, MAC) layer, and a physical (physical, PHY) layer. The AAU implements some physical layer processing functions, radio frequency processing, and a function related to an active antenna. Information at the RRC layer is eventually converted into information at the PHY layer, or is converted from information at the PHY layer. Therefore, in this architecture, higher layer signaling such as RRC layer signaling may also be considered as being sent by the DU or sent by the DU and the AAU. It may be understood that the network device may be a device including one or more of a CU node, a DU node, and an AAU node. In addition, the CU may be classified into a network device in an access network (radio access network, RAN), or the CU may be classified into a network device in a core network (core network, CN). This is not limited in this application.

In embodiments of this application, the terminal device or the network device includes a hardware layer, an operating system layer running on the hardware layer, and an application layer running on the operating system layer. The hardware layer includes hardware such as a central processing unit (central processing unit, CPU), a memory management unit (memory management unit, MMU), and a memory (also referred to as a main memory). The operating system may be any one or more types of computer operating systems that implement service processing through a process (process), for example, a Linux operating system, a Unix operating system, an Android operating system, an iOS operating system, or a Windows operating system. The application layer includes applications such as a browser, an address book, word processing software, and instant messaging software. In addition, a specific structure of an entity for executing a method provided in embodiments of this application is not particularly limited in embodiments of this application, provided that a program that records code of the method provided in embodiments of this application can be run to perform communication according to the method provided in embodiments of this application. For example, the entity for executing the method provided in embodiments of this application may be the terminal device or the network device, or a functional module that can invoke and execute the program in the terminal device or the network device.

In addition, aspects or features of this application may be implemented as a method, an apparatus, or a product that uses standard programming and/or engineering technologies. The term "product" used in this application covers a computer program that can be accessed from any computer-readable component, carrier or medium. For example, the computer-readable medium may include but is not limited to: a magnetic storage component (for example, a hard disk, a floppy disk or a magnetic tape), an optical disc (for example, a compact disc (compact disc, CD), a digital versatile disc (digital versatile disc, DVD), a smart card and a flash memory component (for example, erasable programmable read-only memory (erasable programmable read-only memory, EPROM), a card, a stick, or a key drive). In addition, various storage media described in this specification may represent one or more devices and/or other machine-readable media that are configured to store information. The term "machine-readable storage media" may include but is not limited to a radio channel, and various other media that can store, include, and/or carry instructions and/or data.

It should be understood that FIG. 1 and FIG. 2 use communication between the network device and the terminal device as an example to briefly describe a communication scenario to which this application can be applied, and do not impose a limitation on another scenario to which this application can be applied.

It should be further understood that FIG. 1 and FIG. 2 are merely simplified schematic diagrams of examples for ease of understanding. The communication system may further include another network device or another terminal device, and the another network device or the another terminal device are not shown in FIG. 1 and FIG. 2.

For example, the communication system may further include a core network device configured to manage terminal device and network device configurations, for example, including an access and mobility management function (access and mobility management function, AMF) network element, a session management function (session management function, SMF) network element, a user plane function (user plane function, UPF) network element, and a policy control function (policy control function, PCF) network element.

FIG. 1 and FIG. 2 are communication systems to which embodiments of this application are applicable. To facilitate understanding of the technical solutions in embodiments of this application, before the solutions in embodiments of this application are described based on a 5G architecture, some terms or concepts in 5G that may be used in embodiments of this application are first briefly described.

1. Random access procedure

The random access procedure is a procedure that starts when a terminal device sends a random access preamble (preamble) to attempt to access a network and ends before a basic signaling connection is established between the terminal device and the network.

It should be noted that before the terminal device selects a random access channel occasion (RACH occasion, RO) for sending the preamble, the terminal device needs to select an uplink carrier. For example, when a supplementary uplink (supplementary uplink, SUL) or a normal uplink (normal uplink, NUL) is configured, the terminal device may select to work on the SUL or the NUL.

After selecting the uplink carrier, the terminal device (for example, a terminal device in an RRC connected mode) may need to perform a bandwidth part (BWP) operation. For example, when no RO is configured on an active uplink BWP of the terminal device, the terminal device needs to switch the active uplink BWP to an initial uplink BWP.

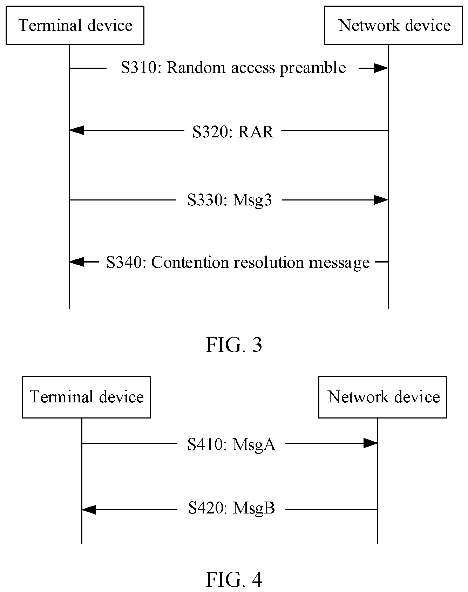

After selecting the uplink carrier or the BWP operation, the terminal device needs to select a random access (random access, RA) type. It may be understood that the terminal device needs to select whether to perform two-step random access (two-step random access shown in FIG. 4 below) or four-step random access (four-step random access shown in FIG. 3 below).

Further, after determining the RA type, the terminal device needs to select a RACH resource. The terminal device may select, based on a selected synchronization signal and PBCH block (Synchronization Signal and PBCH block, SSB) and a mapping relationship between the SSB and the RO, an RO that sends the preamble. Alternatively, the terminal device may select, based on the selected SSB and the mapping relationship between the SSB and the preamble, a to-be-sent preamble.

For example, one SSB may correspond to a plurality of ROs, or a plurality of SSBs are mapped to one RO. For another example, one SSB corresponds to one or more preambles, and different SSBs may use different preambles.

Currently, random access is mainly classified into two types: four-step random access and two-step random access. For ease of understanding, a four-step random access procedure and a two-step random access procedure are respectively described with reference to FIG. 3 and FIG. 4.

FIG. 3 is a schematic flowchart of the four-step random access procedure.

It can be seen from FIG. 3 that the four-step random access procedure may include the following steps.

S310: A terminal device sends a random access preamble to a network device.

For example, the terminal device sends the random access preamble to the network device on a physical random access channel (physical random access channel, PRACH) resource, where the PRACH resource may be understood as a random access channel occasion (RACH occasion, RO).

After receiving the random access preamble sent by the terminal device, the network device sends a random access response (random access response, RAR) to the terminal device based on the random access preamble. The random access procedure shown in FIG. 3 further includes the following step.

S320: The network device sends the RAR to the terminal device.

For example, the RAR sent by the network device to the terminal device includes indication information indicating an uplink resource for sending a message 3 (message 3, Msg3). It may be understood that after receiving the RAR, the terminal device can learn of the uplink resource used to send the Msg3.

After receiving the RAR, the terminal device sends the Msg3 based on the RAR. The random access procedure shown in FIG. 3 further includes the following step.

S330: The terminal device sends the Msg3 to the network device.

For example, the Msg3 may include layer 2 (layer 2, L2) information and/or layer 3 (layer 3, L3) information, for example, an RRC connection setup request message, for another example, a beam failure recovery (beam failure recovery, BFR) MAC control element (control element, CE).

When the terminal device successfully performs contention resolution, the network device sends a contention resolution message to the terminal device. The random access procedure shown in FIG. 3 further includes the following step.

S340: The network device sends the contention resolution message to the terminal device.

For example, the contention resolution message includes an identifier (identifier, ID) of the terminal device, and the contention resolution message may also be referred to as a message 4 (message 4, Msg4). When it is determined from the Msg3 that random access is contention-based random access, information about terminal devices that need to contend for is stored. When contention resolution is performed based on the Msg4, contention resolution is performed on these terminal devices that contend for.

It should be noted that FIG. 3 in this application is merely a schematic diagram provided for ease of describing the four-step random access procedure, and does not constitute any limitation on the protection scope of this application.

For specific descriptions of the four-step random access procedure, refer to descriptions in a current conventional technology.

FIG. 4 is a schematic flowchart of the two-step random access procedure.

It can be seen from FIG. 4 that the two-step random access procedure may include the following steps.

S410: A terminal device sends a message A (message A, MsgA) to a network device.

The MsgA includes a preamble part and a physical uplink shared channel (physical uplink shared channel, PUSCH) part. The preamble part is sent on a PRACH resource (for example, the RO described above), and the PUSCH resource may carry L2 or L3 information, for example, a BFR MAC CE or an RRC connection setup request message.

After receiving the message A sent by the terminal device, the network device sends an RAR to the terminal device based on the message A. The random access procedure shown in FIG. 4 further includes the following step.

S420: The network device sends a message B (message B, MsgB) to the terminal device.

The MsgB may include a success RAR (success RAR) or a fallback RAR (fallback RAR).

When the terminal device receives the fallback RAR, the terminal device needs to fall back to the four-step random access procedure, that is, sending the Msg3.

In addition to the foregoing fallback procedure from the two-step random access to the four-step random access, if the network device selects to perform the two-step random access procedure when triggering random access, after the preamble in the two-step random access procedure is sent for a maximum quantity of times, the terminal device may further fall back (fall back) to the four-step random access procedure to attempt to access, thereby increasing an access success rate of the terminal device and ensuring access performance of the terminal device.

2. PRACH resource partition

It can be learned from the foregoing description of the random access procedure that the random access preamble needs to be sent based on the PRACH resource for random access. Currently, a protocol specifies that PRACH resources need to be partitioned by a terminal device having the following features. Four-step random access is used as an example.

(1) Reduced capability (Reduced Capability, RedCap)

RedCap UE is a terminal device with reduced capabilities. The reduced capability may be a reduction in maximum bandwidth supported by the terminal device, a reduction in a quantity of antennas of the terminal device, or the like. Because the maximum bandwidth (for example, 20 MHz) supported by the RedCap UE is smaller than that supported by a conventional terminal device (or referred to as a non-RedCap terminal device), in a random access procedure, a network device needs to identify the RedCap UE early during sending of a Msg1, so that the network device can perform special processing on the RedCap UE in a subsequent RACH procedure.

For example, a Msg3 uplink resource scheduled in an RAR does not exceed the maximum bandwidth supported by the RedCap UE, and a proper configuration is performed on the RedCap UE during sending of a Msg4.

Alternatively, the network device may not configure Msg1 early identification of the RedCap, but identify the RedCap UE based on the Msg3.

For example, when initial uplink BWP bandwidth configured by the network device does not exceed 20 MHz, the network device may identify the RedCap UE based on the Msg3.

It should be noted that RedCap should be understood as a type of the terminal device. To be described in a unified manner with the following three features, "feature" is also used in the following description, that is, RedCap may be understood as a feature supported by the terminal device.

(2) Small data transmission (small data transmission, SDT)

A terminal device in an RRC inactive (RRC_INACTIVE) state may perform RACH-based small data transmission. It may be understood that the terminal device also sends small data when sending a Msg3, and the terminal device can perform small data transmission without entering a connected mode, thereby reducing power consumption and a delay.

Therefore, the terminal device may report, during sending of a Msg1, that the terminal device requests small data transmission, so that a network device may schedule, in an RAR, a large Msg3 transmission resource for the terminal device to carry the small data.

(3) Coverage enhancement (coverage enhancement, CovEnh)

CovEnh studies how to improve coverage performance of a Msg3 through repeated transmission. Therefore, a terminal device may report, during sending of a Msg1, that coverage enhancement needs to be performed, so that a network device may schedule Msg3 repetitions (repetitions).

(4) RAN slicing (RAN slicing)

For RAN slicing, considering that priorities of some services or users are high, a network device may provide dedicated RACH resources for the services or users, to indicate a high priority of a slice to a network, thereby implementing RACH resource isolation.

In addition, one slice group may include one or more slices. The network device may configure an independent dedicated PRACH resource for each slice group, and a plurality of slice groups may also share the independent dedicated PRACH resource.

For the foregoing four features, the network device needs to identify a feature of a terminal device during sending of a Msg1 (or a MsgA) in a RACH procedure. Therefore, the network device needs to configure an independent PRACH resource for the feature. The independent PRACH resource may include an independent RO (for example, an independent time-frequency domain resource RO) or a dedicated preamble.

For example, the network device may configure the independent RO resource for the RedCap UE. The network device receives a preamble on the resource, and may identify that a terminal device that sends the preamble is the RedCap UE, to perform special processing on the terminal device in a subsequent procedure.

Feature combinations (feature combinations) between the foregoing four features also need dedicated RACH resources configured by the network device.

For example, if the RedCap UE triggers RACH-based small data transmission, the network device needs to identify, during sending of the Msg1, that the terminal device is the RedCap UE, to perform special processing on the RedCap UE in the subsequent RACH procedure. In addition, the network device further needs to identify, during sending of the Msg1, that the terminal device requests SDT transmission, to consider small data transmission when configuring the Msg3 resource. In this case, the network device needs to configure the independent RACH resource for a scenario in which the RedCap LTE triggers RACH-based small data transmission, the RedCap UE triggering RACH-based small data transmission may be represented as RedCap+SDT (or represented as RedCap and SDT), and the independent RACH resource may be a resource corresponding to the feature combination of RedCap+SDT.

The feature combinations of the foregoing four features are as follows:

SDT+RedCap (or represented as RedCap and SDT);
RedCap+CovEnh (or represented as RedCap and CovEnh);
CovEnh+slicing (or represented as CovEnh and slicing);
SDT+slicing (or represented as SDT and slicing);
SDT+CovEnh (or represented as SDT and CovEnh);
RedCap+slicing (or represented as RedCap and slicing);
SDT+RedCap+CovEnh (or represented as SDT and RedCap and CovEnh);
SDT+RedCap+slicing (or represented as SDT and RedCap and slicing);
SDT+CovEnh+slicing (or represented as SDT and CovEnh and slicing);
RedCap+CovEnh+slicing (or represented as RedCap and CovEnh and slicing); and
SDT+REdCap+CovEnh+slicing (or represented as SDT and RedCap and CovEnh and slicing).

It should be noted that a specific name of the feature combination is not limited in this application provided that the feature combination includes a plurality of features. Whether the features in the feature combination are represented by "+", "and", or another connection symbol, or whether there is no connection symbol is not limited. For example, SDT+RedCap can be directly represented as SDT, RedCap.

Therefore, the network device may not only need to configure independent RACH resources for the foregoing four features, but also need to configure independent RACH resources for the foregoing feature combinations.

In addition, combinations of two-step random access and the foregoing features or feature combinations need to be considered.

For example, the network device may need to configure an independent two-step random access resource for the RedCap UE.

For another example, the network device may need to configure an independent two-step random access resource for RedCap UE that performs a service in a slice group 1.

3. RACH resource selection

In a network device configuration, a network device may configure dedicated RACH resources for all features or feature combinations (for example, the foregoing four features, the feature combinations of the four features, or the combinations of the features or feature combinations and two-step random access), or may configure dedicated RACH resources for only some features or feature combinations. A dedicated RACH resource for each feature or feature combination can be referred to as a RACH partition (RACH partition).

For example, a feature combination that triggers a RACH procedure is RedCap+CovEnh+slicing, but the network device does not configure a dedicated RACH resource of the feature combination of RedCap+CovEnh+slicing, and only configures dedicated RACH resources of features or feature combinations including RedCap+slicing and RedCap+Cov-Enh. In this case, a dedicated RACH resource that is of which feature or feature combination and that is selected by the terminal device may depend on a feature priority (or referred to as a feature priority sequence, a feature sequence, a feature priority criterion, or the like) of the terminal device in a RACH resource selection procedure. The feature priority herein may also be understood as a feature sequence of performing the RACH resource selection procedure by the terminal device, and does not necessarily represent importance of services corresponding to different features.

The feature combination that triggers the RACH procedure may be understood as conditions that are of related features in the feature combination and that are met in a RACH startup procedure. For example, the terminal device is RedCap UE, a signal quality threshold measured by the terminal device meets a condition of coverage enhancement, a service arriving at the terminal device is related to a slice group, and the feature combination that triggers the RACH procedure may be RedCap+CovEnh+slicing.

In addition to the RACH resource selection procedure, the feature priority may also affect a RACH fallback (fallback) procedure.

For example, the feature combination that triggers the RACH procedure is RedCap+CovEnh+slicing, and the network device configures a dedicated RACH resource of the feature combination of RedCap+CovEnh+slicing. However, if a RACH procedure performed by the terminal device based on the resource fails (one or more times), the terminal device may fall back to a RACH procedure on another resource. In this case, whether the dedicated resource of the feature combination of RedCap+slicing or the dedicated resource of the feature combination of RedCap+CovEnh is selected in the RACH procedure also depends on a feature priority in a RACH fallback mechanism.

With reference to FIG. 1 and FIG. 2, the foregoing briefly describes a scenario to which this application is applicable, and describes a basic concept in this application. It can be learned from the foregoing that the feature priority needs to be considered during RACH resource selection.

A RACH resource selection method is: Priorities between features are specified in a protocol, to determine a RACH resource selection procedure and/or a RACH fallback procedure after the foregoing features are introduced.

For example, the protocol specifies that the priorities of the features in the resource selection procedure are as follows:

First priority: RedCap;
Second priority: RAN slicing; and
Third priority: coverage enhancement or SDT.

A fallback procedure is used as an example. If a RACH is triggered by a feature combination of RedCap+Cov-Enh+slicing, but a RACH procedure based on a dedicated resource of this feature combination fails, UE should fall back to a dedicated resource of a feature combination of RedCap+slicing (if configured) instead of a dedicated resource of a feature combination of RedCap+CovEnh based on the foregoing priorities of the features.

However, considering that deployments and policies of some network devices are different, or a deployment and a policy of the network device in a specific time phase change, in the foregoing example, the network device may need to ensure coverage of the terminal device first, that is, the terminal device needs to fall back to the dedicated resource of the feature combination of RedCap+CovEnh according to an expectation of the network device. In addition, different terminal devices may have different service priority requirements. Therefore, the feature priority specified in the protocol may not meet a requirement of the terminal device.

The protocol specifies the feature priority of RACH resource selection and/or the RACH fallback mechanism performed by the terminal device. In this case, the terminal device always performs RACH resource selection and/or the RACH procedure based on the feature priority in different networks, without considering the deployment and the policy of the network and the service requirement of the terminal device. Flexibility of RACH resource selection and/or RACH fallback is low.

To avoid a problem that RACH resource selection does not meet the requirement due to the feature priority specified in the current protocol, this application provides a random access method, to improve flexibility of RACH resource selection.

A specific structure of an entity for executing a method provided in embodiments of this application is not particularly limited in following embodiments provided that a program that records code of the method provided in embodiments of this application can be run to perform communication according to the method provided in embodiments of this application. For example, the entity for executing the method provided in embodiments of this application may be the terminal device or the access network device, or a functional module that can invoke and execute the program in the terminal device or the access network device.

For ease of understanding of embodiments of this application, the following descriptions are provided.

First, in this application, "indicate" may be understood as "enable", and "enable" may include direct enabling and indirect enabling. When a piece of information is described as being used to enable A, the information may directly enable A or indirectly enable A, but it does not necessarily indicate that the information carries A.

Information enabled by information is referred to as to-be-enabled information. In a specific implementation process, there are a plurality of manners of enabling the to-be-enabled information, for example, but not limited to, the following manners: The to-be-enabled information is directly enabled, for example, the to-be-enabled information or an index of the to-be-enabled information is enabled. Alternatively, the to-be-enabled information may be indirectly enabled by enabling other information, and there is an association relationship between the other information and the to-be-enabled information. Alternatively, only a part of the to-be-enabled information may be enabled, and the other part of the to-be-enabled information is known or pre-agreed on. For example, specific information may alternatively be enabled by using an arrangement sequence of a plurality of pieces of information that is pre-agreed on (for example, stipulated in a protocol), to reduce enabling overheads to some extent. In addition, a common part of all pieces of information may further be identified and enabled in a unified manner, to reduce enabling overheads caused by separately enabling same information.

Second, "first", "second", and various numerical numbers (for example, "#1", and "#2") shown in this application are merely for ease of description, and are used to distinguish between objects, but are not intended to limit the scope of embodiments of this application. For example, the terms are used to differentiate between different indication information, but are not used to describe a particular order or sequence. It should be understood that the objects described in this way are interchangeable in a proper circumstance, so that a solution other than embodiments of this application can be described.

Third, in this application, "preset" may include "predefined", for example, defined in protocols. "Being predefined" may be implemented by prestoring corresponding code or a corresponding table in a device (for example, including a terminal device or a network device) or in another manner that may indicate related information. A specific implementation of "being predefined" is not limited in this application.

Fourth, "being stored" in embodiments of this application may be "being stored in one or more memories". The one or more memories may be separately disposed, or may be integrated into an encoder or a decoder, a processor, or a communication apparatus. Alternatively, a part of the one or more memories may be separately disposed, and a part of the one or more memories are integrated into the translator, the processor, or the communication apparatus. A type of the memory may be a storage medium in any form. This is not limited in this application.

Fifth, "protocols" in embodiments of this application may be standard protocols in the communication field, for example, may include a 5G protocol, a new radio (new radio, NR) protocol, and a related protocol used for a future communication system. This is not limited in this application.

Without loss of generality, interaction between the network device and the terminal device is used as an example below to describe in detail the random access method provided in embodiments of this application.

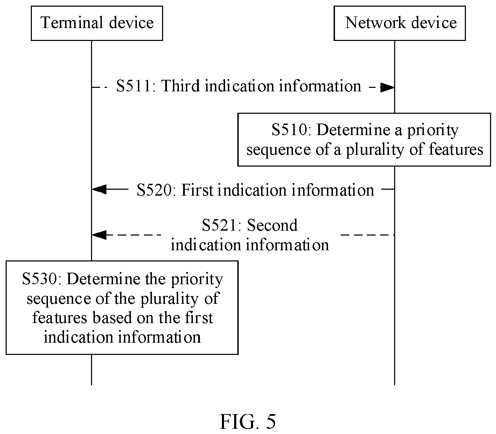

FIG. 5 is a schematic flowchart of a random access method provided in an embodiment of this application. The following steps are included.

S510: A network device determines a priority sequence of a plurality of features.

Different features in the plurality of features meet at least one of the following: the different features correspond to different service requirements, the different features correspond to different transmission manners, the different features correspond to different device types, the different features correspond to different application scenarios, or the different features correspond to different functions.

For example, the different features in the plurality of features may be understood as any two features in the plurality of features.

For example, that the different features correspond to different service requirements may be understood as that the different features correspond to different performance requirements. For example, the different features have different requirements for one or more pieces of performance such as a transmission delay, reliability, and a service priority, or the different features correspond to different services (such as a video, a call, and a cloud game). Optionally, the service requirement may also be quality of service (Quality of QoS, QoS).

For example, that the different features correspond to different transmission manners may be understood as that the different features correspond to different transmission manners such as multicast, broadcast, or unicast.

For example, that the different features correspond to different device types may be understood as that the different features correspond to different device types such as RedCap UE and a physical network terminal.

For example, that the different features correspond to different application scenarios may be understood as that the different features may be used in different scenarios such as industrial internet of things, a wearable device, a smartphone, and satellite communication.

For example, that the different features correspond to different functions may be understood as that the different features correspond to different functions such as improving coverage of a terminal device, reducing power consumption of the terminal device, reducing costs of the terminal device, and improving user experience.

Alternatively, the plurality of features include several of a reduced capability device type, small data transmission, coverage enhancement, or access network slicing enhancement.

Specifically, the plurality of features include RedCap, SDT, CovEnh, RAN slicing, and the like that are related to the PRACH resource partition described in the foregoing basic concepts.

The plurality of features may be several of RedCap, SDT, CovEnh, and RAN slicing.

For example, the plurality of features are RedCap, SDT, CovEnh, and RAN slicing.

For another example, the plurality of features are RedCap, SDT, and CovEnh.

For still another example, the plurality of features are RedCap, SDT, and RAN slicing.

For still another example, the plurality of features are RedCap and SDT.

In addition, feature priorities of different slicing groups may also be configured to be different.

For example, a sequence of the feature priorities is RedCap>RAN slicing group 2>CovEnh>RAN slicing group 1>SDT.

Alternatively, the network device may configure a dedicated random access resource for a feature. Dedicated random access resources for different features may be different. The random access resource includes a time domain resource, a frequency domain resource, or a code domain resource.

It should be noted that, in this embodiment of this application, a type and a quantity of specific features included in the plurality of features are not limited. In addition, a specific form of the feature is not limited in this application, and may be one or more of several features (for example, a reduced capability device type, small data transmission, coverage enhancement, or access network slicing enhancement) currently discussed, or may be one or more of other features introduced in a future communication method.

In a possible implementation, the network device may configure priorities of different features based on a deployment and a policy of the network device.

For example, according to the deployment and the policy of the network device, the network device supports a terminal device with reduced capabilities, small data transmission, coverage enhancement, and network slicing enhancement. A priority sequence of the reduced capability, small data transmission, coverage enhancement, and network slicing enhancement is as follows: the reduced capability>small data transmission>coverage enhancement>network slicing enhancement. The network device determines that the priority sequence of the plurality of features is as follows: the reduced capability>small data transmission>coverage enhancement>network slicing enhancement.

In another possible implementation, the network device may determine priorities of different features based on historical communication information.

For example, the historical communication information indicates that the network device supports a reduced capability, small data transmission, coverage enhancement, and network slicing enhancement. A priority sequence of the reduced capability, small data transmission, coverage enhancement, and network slicing enhancement is as follows: the reduced capability>small data transmission>coverage enhancement>network slicing enhancement. The network device determines that the priority sequence of the plurality of features is as follows: the reduced capability>small data transmission>coverage enhancement>network slicing enhancement.

In still another possible implementation, the network device may determine priorities of different features based on an indication of a management device.

For example, the management device indicates that the network device supports a reduced capability, small data transmission, coverage enhancement, and network slicing enhancement. A priority sequence of the reduced capability, small data transmission, coverage enhancement, and network slicing enhancement is as follows: the reduced capability>small data transmission>coverage enhancement>network slicing enhancement. The network device determines that the priority sequence of the plurality of features is as follows: the reduced capability>small data transmission>coverage enhancement>network slicing enhancement.

It should be noted that a specific implementation in which the network device determines the priority sequence of the plurality of features is not limited in this embodiment of this application.

Further, the network device may further update the priority sequence of the plurality of features based on a real-time policy and deployment, thereby improving flexibility of determining the priority sequence of the plurality of features, and improving access performance of the terminal device.

For example, when another feature (for example, a feature other than the foregoing four features) is introduced subsequently, the network device may also increase a priority of the feature.

For example, a feature #1 is introduced and a priority of the feature #1 is higher than that of RedCap. Currently, a priority sequence of the plurality of features is RedCap>RAN slicing>CovEnh>SDT. The network device may not need to update the priority sequence of the current four features, but may indicate the newly introduced feature as a highest priority to the terminal device. Therefore, this method for configuring the priority sequence has better forward compatibility.

For example, the network device may configure only priorities of some features. For example, a protocol specifies that RedCap is a highest priority, and slicing is a second priority. The network device configures feature priorities of SDT and CovEnh as CovEnh>SDT.

Specifically, after determining the priority sequence of the plurality of features, the network device may configure the priority sequence of the plurality of features for the terminal device based on first indication information. The method shown in FIG. 5 further includes the following step.

S520: The network device sends the first indication information to the terminal device, or the terminal device receives the first indication information from the network device.

The first indication information indicates the priority sequence that is of the plurality of features and that is determined by the network device.

In a possible implementation, the first indication information indicates a sequence of the plurality of features, and the sequence of the plurality of features is used to determine the priority sequence of the plurality of features.

For example, that the first indication information indicates the sequence of the plurality of features may be that the first indication information explicitly indicates the sequence of the plurality of features. For example, feature identification information of the plurality of features indicates the sequence of the plurality of features. For ease of understanding, the following uses an example in which the plurality of features include RedCap, RAN slicing, CovEnh, and SDT for description.

For example, the first indication information includes identification information of the plurality of features, a sequence of the identification information of the plurality of features indicates that the sequence of the plurality of features is RedCap, RAN slicing, CovEnh, and SDT, and the priority sequence of the plurality of features is RedCap>RAN slicing>CovEnh>SDT.

Specifically, a feature may be indicated by using an identifier indicating the feature. For example, if each feature is identified by using four bits, an identifier of RedCap is 0000, an identifier of RAN slicing is 0001, an identifier of SDT feature is 0011, and an identifier of CovEnh is 0010, the first indication information includes a sequence indication field of the plurality of features: 0000000100100011.

For example, that the first indication information indicates the sequence of the plurality of features may be that the first indication information implicitly indicates the sequence of the plurality of features. For example, dedicated configuration information of the plurality of features indicates the sequence of the plurality of features. For ease of understanding, the following uses an example in which the plurality of features include RedCap, RAN slicing, CovEnh, and SDT for description.

For example, the network device separately configures a dedicated resource or a dedicated configuration for each feature. In this case, a sequence of the dedicated resource or the dedicated configuration of each feature is RedCap, RAN slicing, CovEnh, and SDT, and the priority sequence of the plurality of features is RedCap>RAN slicing>CovEnh>SDT, where the first indication information may be understood as an occurrence sequence of each feature.

In another possible implementation, the first indication information indicates priority information of the plurality of features, the priority information includes priority information of at least one feature in the plurality of features, and the priority information is used to determine the priority sequence of the plurality of features.

For example, that the first indication information indicates priority information of the plurality of features may be that the first indication information indicates absolute priorities of the features. For ease of understanding, the following uses an example in which the plurality of features include RedCap, RAN slicing, CovEnh, and SDT for description.

For example, the network device configures the absolute priorities for the features, to determine the priority sequence of the features. The network device configures a feature absolute priority of RedCap as 7, a feature absolute priority of SDT as 5, a feature absolute priority of RAN slicing as 6, and a feature absolute priority of CovEnh as 4.

Optionally, a larger value indicates a higher priority, and the feature priority sequence is RedCap>RAN slicing>SDT>CovEnh.

Optionally, a smaller value indicates a higher priority, and the feature priority sequence is CovEnh>SDT>RAN slicing>RedCap.

For another example, the network device may further configure a feature priority of a feature combination, and the feature combination includes a plurality of features. For example, a feature combination #1 includes CovEnh and RAN slicing, and a feature priority of the feature combination #1 is 5. The feature combination #1 may be compared with other features or feature combinations in priority. The features included in the feature combination are also configured by the network device.

For another example, the network device may configure a same priority for different features. For example, if feature priorities of CovEnh and RAN slicing are both 5, the terminal device performs random selection between the two features, or the terminal device may perform selection between the two features based on other information (for example, historical communication information). This is not limited in this application.

For example, that the first indication information indicates priority information of the plurality of features may be that the first indication information indicates the priority sequence of the features. For ease of understanding, the following uses an example in which the plurality of features include RedCap, RAN slicing, CovEnh, and SDT for description.

For example, if the network device indicates that a feature priority of RedCap is 1, a feature priority of SDT is 3, a feature priority of RAN slicing is 2, and a feature priority of CovEnh is 4, the feature priority sequence is RedCap>RAN slicing>SDT>CovEnh.

It should be noted that the foregoing solution in which the first indication information indicates the priority sequence of the plurality of features by indicating the sequence of the features, and the first indication information indicates the priority sequence of the plurality of features by indicating the priority information of the features is merely an example for description, and the priority sequence of the plurality of features may be indicated in different manners. This does not constitute any limitation on the protection scope of this application. Other indication information that can be used to indicate the priority sequence of the plurality of features also falls within the protection scope of this application. Details are not described herein again.

In this embodiment of this application, the priority sequence that is of the plurality of features and that is determined by the network device may be for the terminal device served by the network device, or may be for a terminal device. The foregoing first indication information may be sent in the following two possible manners.

Possible manner 1:

The first indication information is included in a system message. The foregoing step S520 may be understood as: The network device sends a system message to the terminal device, where the system message includes the first indication information.

In the possible manner 1, the network device may broadcast a priority sequence of a plurality of features in the system message. The network device can configure, in a broadcast manner, the priority sequence of the plurality of features for a plurality of served terminal devices, thereby improving configuration efficiency.

For example, if the network device broadcasts the priority sequence of the plurality of features in the system message (for example, a SIB 1), the terminal device needs to perform RACH resource selection and/or perform RACH fallback based on the priority sequence that is of the plurality of features and that is broadcast in the SIB 1.

For example, the priority sequence that is of the plurality of features and that is broadcast by the network device is: RedCap>CovEnh>RAN slicing>SDT. In this case, if the protocol specifies a default priority sequence of the plurality of features (for example, the protocol specifies that the feature priority sequence is RedCap>RAN slicing>CovEnh>SDT), the terminal device should perform RACH resource selection and/or RACH fallback based on the priority sequence that is of the plurality of features and that is broadcast in the system message: RedCap>CovEnh>RAN slicing>SDT.

For example, the priority sequence that is of the plurality of features and that is configured in the system message may include a priority sequence of features of a neighboring cell. For example, the priority sequence of the features of the neighboring cell is configured in an SIB 2, an SIB 3, or an SIB 4.

Possible manner 2:

The first indication information is included in dedicated signaling. The foregoing step S520 may be understood as: The network device sends dedicated signaling to the terminal device, where the dedicated signaling includes the first indication information.

In the possible manner 2, the network device configures a priority sequence of a plurality of features by using the dedicated signaling. The network device can configure the priority sequence of the plurality of features for a terminal device.

For example, when the terminal device enters a connected mode, the network device may configure the priority sequence of the plurality of features by using an RRC reconfiguration message.

When the network device configures the priority sequence of the plurality of features in the dedicated signaling, the terminal device may perform RACH resource selection and/or RACH fallback by using the priority sequence that is of the plurality of features and that is configured in the dedicated signaling. For example, the terminal device may ignore the priority sequence that is of the plurality of features and that is broadcast in the system message and/or the default priority sequence that is of the plurality of features and that is specified in the protocol.

For example, when the terminal device is about to leave the connected mode, the network device may configure the priority sequence of the plurality of features by using an RRC release message. After the terminal device enters a non-connected mode (for example, an RRC IDLE state or an RRC INACTIVE state), the terminal device may perform RACH resource selection and/or RACH fallback by using the priority sequence that is of the plurality of features and that is configured in the RRC release message.

For example, the priority sequence that is of the plurality of features and that is configured in the RRC release message may include a priority sequence of features of a serving cell and/or a priority sequence of features of a neighboring cell. The serving cell may be understood as a cell that sends the RRC release message to the terminal device.

In a possible implementation, the priority sequence (for example, a priority sequence #1) that is of the plurality of features and that is indicated by the first indication information and that is included in the system message is different from the priority sequence (for example, a priority sequence #2) that is of the plurality of features and that is indicated by the first indication information and that is included in the dedicated signaling. Both the priority sequence #1 and the priority sequence #2 belong to the priority sequence of the plurality of features.

Further, the network device may indicate effective duration of the configured priority sequence of the plurality of features based on second information. The method procedure shown in FIG. 5 further includes the following step.

S521: The network device sends the second indication information to the terminal device, or the terminal device receives the second indication information from the network device.

The second indication information indicates the effective duration of the priority sequence of the plurality of features.

For example, the system message includes the first indication information and the second indication information, the first indication information indicates the priority sequence (for example, the priority sequence #1) of the plurality of features, and the second indication information indicates effective duration of the priority sequence #1.

For another example, the dedicated message includes the first indication information and the second indication information, the first indication information indicates the priority sequence (for example, the priority sequence #2) of the plurality of features, and the second indication information indicates effective duration of the priority sequence #2.

Optionally, the effective duration may alternatively be predefined in a protocol, or may be included in another message. For example, the first indication information and the second indication information may be sent by using two pieces of signaling. This is not limited in this application.

For example, the second indication information may be a timer or duration indication information.

For ease of understanding, an example in which the dedicated signaling includes the first indication information and the second indication information is used for description.

For example, validity of the priority sequence (for example, the priority sequence #2) that is of the plurality of features and that is indicated by the first indication information and that is in the RRC release message may be controlled by the timer or duration.

When the timer does not expire or specific duration is not reached, the terminal device initiates a RACH procedure based on the priority sequence #2 configured in the RRC release message.

When the timer expires or specific duration is reached, the terminal device initiates a RACH procedure based on the priority sequence (for example, the priority sequence #1) that is of the plurality of features and that is broadcast in the system message or the default feature priority specified in the protocol.

A startup condition of the timer includes: the terminal device receives a configuration of the timer, or the terminal device receives the RRC release message. A stopping condition of the timer includes: the terminal device switches an RRC state, for example, the terminal device enters an RRC connected mode. When the timer expires, the terminal device may discard the priority sequence of the plurality of features, or the terminal device may discard the second indication information. In this case, the terminal device may continue to perform RACH resource selection and/or RACH fallback based on the priority sequence of the plurality of features.

In a possible implementation, the network device may determine the priority sequence of the foregoing plurality of features according to a preference of the terminal device. The method shown in FIG. 5 further includes the following step.

S511: The terminal device sends third indication information to the network device, or the network device receives the third indication information from the terminal device.

The third indication information indicates a priority sequence that is of the plurality of features and that is expected by the terminal device. The third indication information may be included in messages such as an RRC setup request message, an RRC resume request message, or an RRC re-setup request message.

For example, the terminal device may report, in the dedicated signaling (for example, the RRC setup request message, the RRC resume request message, or the RRC re-setup request message), the expected priority sequence of the plurality of features (or referred to as a preferred priority sequence of the plurality of features), and the network device determines, based on the feature priority reported by the terminal device, the priority sequence that is of the plurality of features and that is configured in the dedicated signaling.

It should be noted that the priority sequence (for example, a first priority sequence) that is of the plurality of features and that is expected by the terminal device may be the same as or different from the priority sequence (for example, a second priority sequence) that is of the plurality of features and that is determined by the network device.

Further, after receiving the first indication information, the terminal device can determine the priority sequence of the plurality of features based on the first indication information. The method procedure shown in FIG. 5 further includes the following step.

S530: The terminal device determines the priority sequence of the plurality of features based on the first indication information.

In addition, the terminal device may further select a random access resource based on the priority sequence of the plurality of features. The random access resource includes a time domain resource, a frequency domain resource, and/or a code domain resource. Selecting the time-frequency domain resource may be understood as selecting an RO, and selecting the code domain resource may be understood as selecting a preamble.

In this embodiment of this application, the terminal device selects the random access resource in the following two procedures.

Procedure 1: RACH resource selection

The random access procedure is triggered, and the terminal device selects the random access resource.

For example, a process in which the terminal device selects the random access resource in the procedure 1 is described by using an example in which the first indication information indicates that a priority of a first feature is higher than a priority of a second feature, the terminal device supports at least the first feature and the second feature, and a trigger condition of the random access procedure includes at least the first feature and the second feature. The process includes:

the terminal device determines that a first resource is configured, where the first resource is a random access resource of the first feature, or the first resource is a random access resource of a first feature combination including the first feature.

The terminal device determines that a second resource is configured, where the second resource is a random access resource of a second feature combination including the first feature and the second feature, and the random access resource is included in the second resource.

It should be noted that, when the first indication information indicates a priority of a feature (for example, a third feature) other than the first feature and the second feature, the terminal device needs to select a random access resource of a feature combination including the third feature.

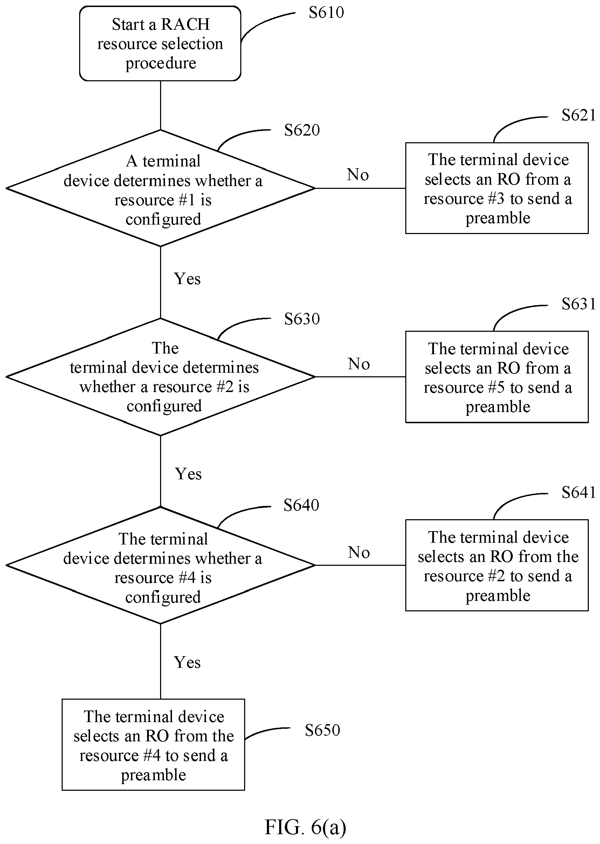

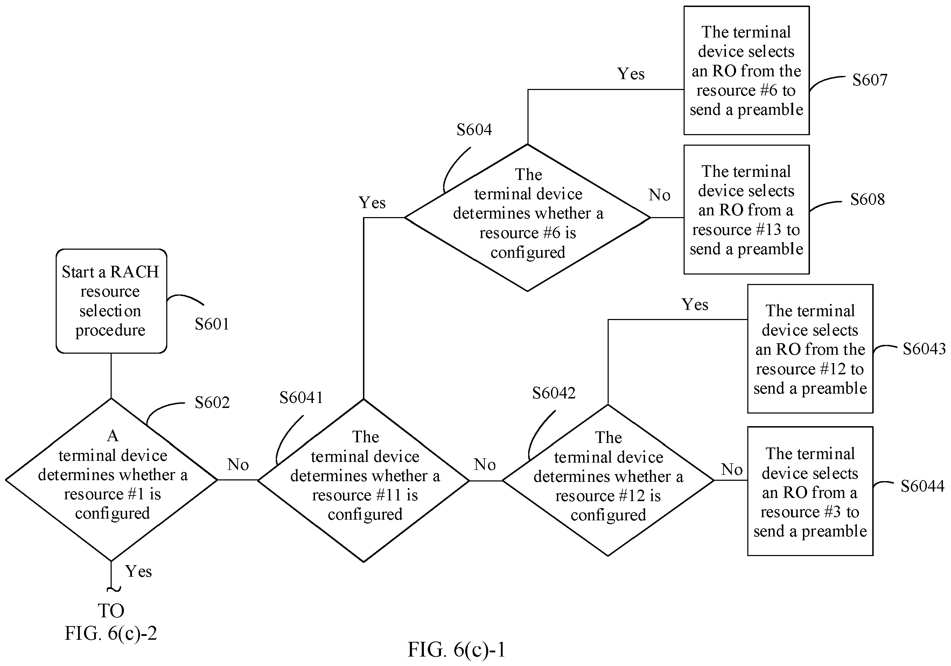

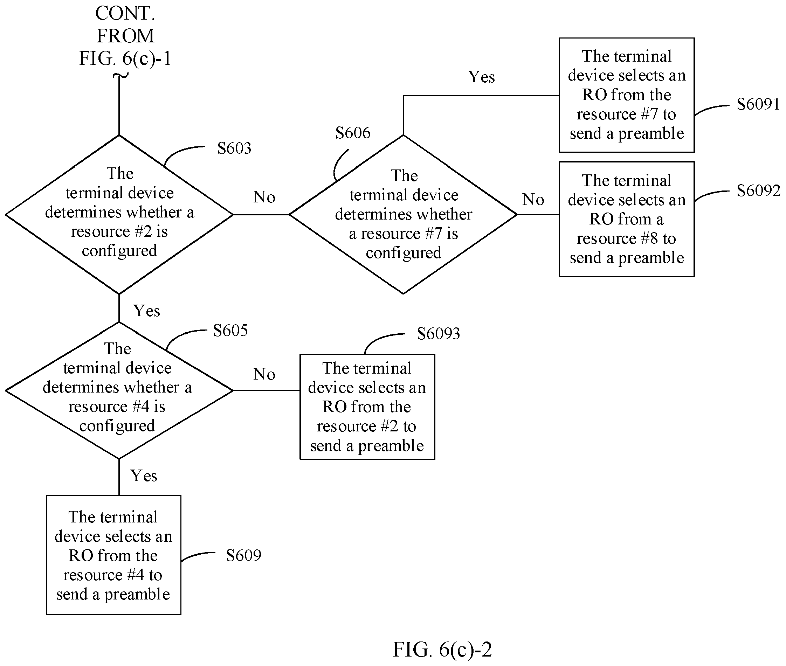

The following uses a specific example to describe the procedure 1 in which the terminal device selects the random access resource. FIG. 6(a) to FIG. 6(d) are schematic flowcharts of selecting a random access resource by a terminal device. The random access resource selection procedure herein may be understood as an initial random access resource selection procedure or a resource selection procedure after the terminal device starts a random access procedure.

A priority sequence of a plurality of features in a scenario shown in FIG. 6(a) is: RedCap>CovEnh>RAN slicing>SDT, the terminal device is RedCap UE, and the terminal device supports a RAN slicing feature and a CovEnh feature. A RACH procedure is triggered by a feature combination of RedCap+RACH slicing (slice group 1)+CovEnh.

The random access resource selection procedure includes the following steps.

S610: Start a RACH resource selection procedure.

S620: The terminal device determines whether a resource #1 is configured.

The resource #1 is a dedicated resource of RedCap, or a dedicated resource of a RedCap-related feature combination (for example, SDT+RedCap, RedCap+slicing, or SDT+RedCap+CovEnh).

If the resource #1 is configured, step S630 is performed: The terminal device determines whether a resource #2 is configured. If the resource #1 is not configured, step S621 is performed: The terminal device selects an RO from a resource #3 to send a preamble.

The resource #2 is a dedicated resource of a RedCap+CovEnh-related feature combination (for example, RedCap+CovEnh or SDT+RedCap+CovEnh) included in the resource #1. The resource #3 is a legacy PRACH resource (that is, a non-RedCap dedicated resource).

If the resource #2 is configured, step S640 is performed: The terminal device determines whether a resource #4 is configured. If the resource #2 is not configured, step S631 is performed: The terminal device selects an RO from a resource #5 to send a preamble.

The resource #4 is a dedicated resource of a RedCap+CovEnh+slicing-related feature combination included in the resource #2, and the resource #5 is a dedicated resource of RedCap or a legacy PRACH resource.

If the resource #4 is configured, step S650 is performed: The terminal device selects an RO from the resource #4 to send a preamble. If the resource #4 is not configured, step S651 is performed: The terminal device selects an RO from the resource #2 to send a preamble.

The random access resource selection procedure shown in FIG. 6(a) is merely an example. The terminal device may also perform another random access resource selection procedure based on the feature priority.

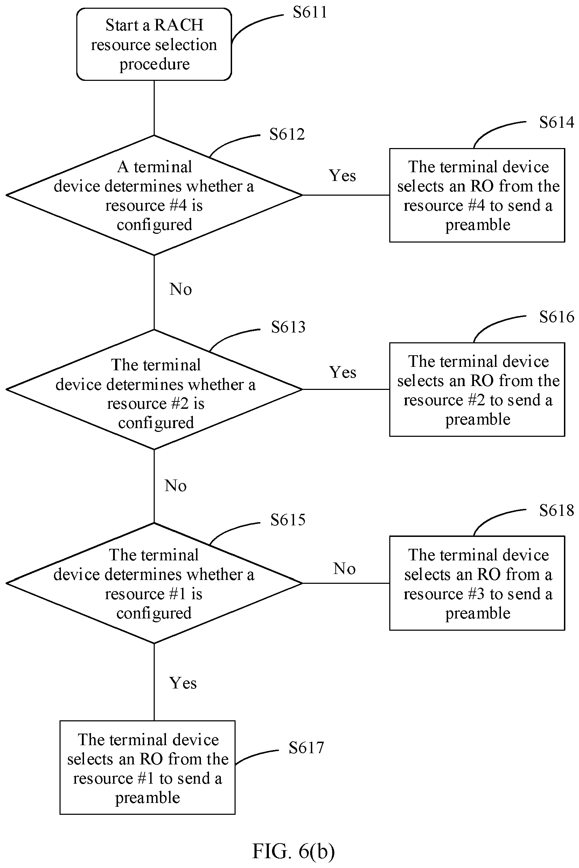

For example, the terminal device first determines whether to configure the dedicated resource of the feature combination that triggers the RACH procedure. If the dedicated resource is not configured, the terminal device determines, in sequence based on feature priorities, whether to configure dedicated resources of other feature combinations. In a procedure shown in FIG. 6(b), FIG. 6(b) is another schematic flowchart of selecting a random access resource by a terminal device.

A priority sequence of a plurality of features in a scenario shown in FIG. 6(b) is: RedCap>CovEnh>RAN slicing>SDT, the terminal device is RedCap UE, and the terminal device supports a RAN slicing feature and a CovEnh feature. A RACH procedure is triggered by a feature combination of RedCap+RACH slicing (slice group 1)+CovEnh.

The random access resource selection procedure includes the following steps.

S611: Start a RACH resource selection procedure.

S612: The terminal device determines whether a resource #4 is configured.

The resource #4 is a dedicated resource of a feature combination of RedCap+CovEnh+slicing.

If the resource #4 is not configured, step S613 is performed: The terminal device determines whether a resource #2 is configured. If the resource #4 is configured, step S614 is performed: The terminal device selects an RO from the resource #4 to send a preamble.

The resource #2 is a dedicated resource of a feature combination of RedCap+CovEnh.

If the resource #2 is not configured, step S615 is performed: The terminal device determines whether a resource #1 is configured. If the resource #2 is configured, step S616 is performed: The terminal device selects an RO from the resource #2 to send a preamble.

The resource #1 is a dedicated resource of RedCap.

If the resource #1 is configured, step S617 is performed: The terminal device selects an RO from the resource #1 to send a preamble. If the resource #1 is not configured, step S618 is performed: The terminal device selects an RO from a resource #3 to send a preamble.

The resource #3 is a legacy PRACH resource (that is, a non-RedCap dedicated resource).

For example, the terminal device may further perform another random access resource selection procedure based on the feature priority.

For example, the terminal device first determines whether to configure the dedicated resource of the feature combination that triggers the RACH procedure. If the dedicated resource is not configured, the terminal device determines, in sequence based on feature priorities, whether to configure dedicated resources of other feature combinations. In addition, when determining, in sequence based on the feature priorities, whether to configure the dedicated resources of the other feature combinations, the terminal device traverses other features in the feature combination that triggers the RACH until a proper resource is selected. FIG. 6(c)-1 and FIG. 6(c)-2 are still another schematic flowchart of selecting a random access resource by a terminal device.

In a procedure shown in FIG. 6(c)-1 and FIG. 6(c)-2, a priority sequence of a plurality of features in a scenario shown in FIG. 6(c)-1 and FIG. 6(c)-2 is: RedCap>CovEnh>RAN slicing>SDT, the terminal device is RedCap UE, and the terminal device supports a RAN slicing feature and a CovEnh feature. A RACH procedure is triggered by a feature combination of RedCap+RACH slicing (slice group 1)+CovEnh.

The random access resource selection procedure includes the following steps.

S601: Start a RACH resource selection procedure.

S602: The terminal device determines whether a resource #1 is configured.

The resource #1 is a dedicated resource of RedCap, or a dedicated resource of a RedCap-related feature combination (for example, SDT+RedCap, RedCap+slicing, or SDT+RedCap+CovEnh).

If the resource #1 is configured, step S603 is performed: The terminal device determines whether a resource #2 is configured.

The resource #2 is a dedicated resource of a RedCap+CovEnh-related feature combination (for example, RedCap+CovEnh or SDT+RedCap+CovEnh) included in the resource #1.

If the resource #1 is not configured, step S6041 is performed: The terminal device determines whether a resource #11 is configured. The resource #11 is a dedicated resource of CovEnh in the dedicated resource, or a dedicated resource of a CovEnh-related feature combination (for example, CovEnh+slicing or CovEnh+SDT).

If the resource #11 is not configured, step S6042 is performed: The terminal device determines whether a resource #12 is configured. The resource #12 is a dedicated resource of slicing in the dedicated resource. When the resource #12 is configured, step S6043 is performed: The terminal device selects an RO from the resource #12 to send a preamble. Alternatively, when the resource #12 is not configured, step S6044 is performed: The terminal device selects an RO from a resource #3 to send a preamble, and the resource #3 is a legacy PRACH resource (that is, a non-RedCap dedicated resource).

If the resource #11 is configured, step S604 is performed: The terminal device determines whether a resource #6 is configured.

The resource #6 is a dedicated resource of CovEnh+slicing in the dedicated resource.

If the resource #6 is configured, step S607 is performed: The terminal device selects an RO from the resource #6 to send a preamble.

If the resource #6 is not configured, step S608 is performed: The terminal device selects an RO from a resource #13 to send a preamble. The resource #13 is a dedicated resource of CovEnh in the dedicated resource.

If the resource #2 is configured, step S605 is performed: The terminal device determines whether a resource #4 is configured.

The resource #4 is a dedicated resource of a RedCap+CovEnh+slicing-related feature combination included in the resource #2.

If the resource #2 is not configured, step S606 is performed: The terminal device determines whether a resource #7 is configured.

The resource #7 is a dedicated resource of RedCap+slicing, or a dedicated resource of a RedCap+slicing-related feature combination (for example, RedCap+slicing+SDT).

If the resource #7 is configured, step S6091 is performed: The terminal device selects an RO from the resource #7 to send a preamble.

If the resource #7 is not configured, step S6092 is performed: The terminal device selects an RO from a resource #8 to send a preamble. The resource #8 is a legacy PRACH resource (that is, a non-RedCap dedicated resource), or the resource #8 is a dedicated resource of RedCap.

If the resource #4 is configured, step S609 is performed: The terminal device selects an RO from the resource #4 to send a preamble. If the resource #4 is not configured, step S6093 is performed: The terminal device selects an RO from the resource #2 to send a preamble. For example, the terminal device may further perform another random access resource selection procedure based on the feature priority.

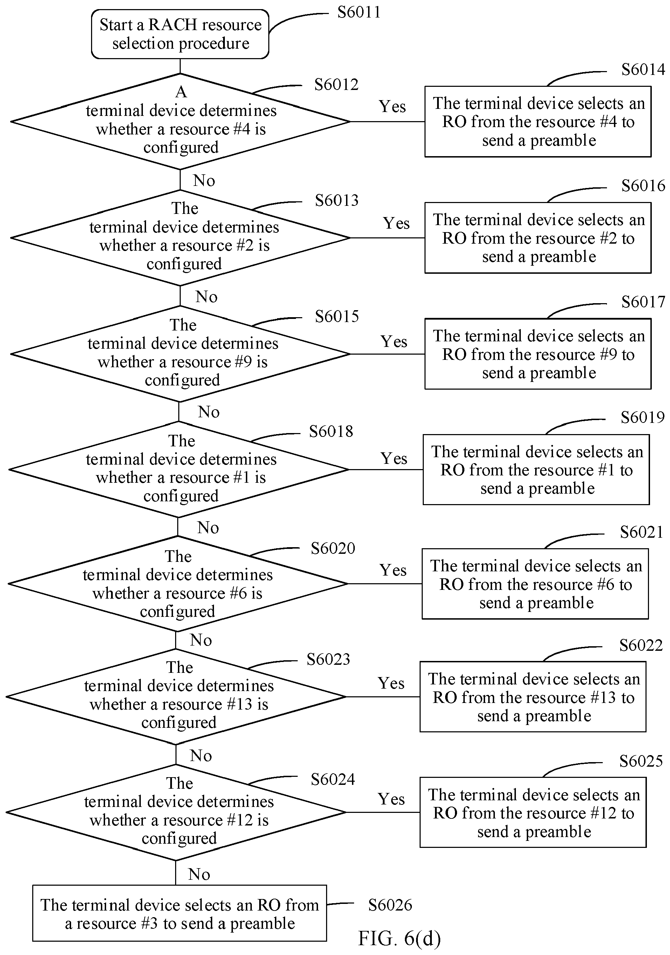

For example, when no dedicated resource of the feature combination that triggers the RACH is configured in the network, the terminal device needs to traverse other features included in the feature combination while sequentially excluding a feature with a lower priority. In a procedure shown in FIG. 6(d), FIG. 6(d) is still another schematic flowchart of selecting a random access resource by a terminal device.

A priority sequence of a plurality of features in a scenario shown in FIG. 6(d) is: RedCap>CovEnh>RAN slicing>SDT, the terminal device is RedCap UE, and the terminal device supports a RAN slicing feature and a CovEnh feature. A RACH procedure is triggered by a feature combination of RedCap+RACH slicing (slice group 1)+CovEnh.

The random access resource selection procedure includes the following steps.

S6011: Start a RACH resource selection procedure.

S6012: The terminal device determines whether a resource #4 is configured.

The resource #4 is a dedicated resource of a feature combination of RedCap+CovEnh+slicing.

If the resource #4 is not configured, step S6013 is performed: The terminal device determines whether a resource #2 is configured. If the resource #4 is configured, step S6014 is performed: The terminal device selects an RO from the resource #4 to send a preamble.

The resource #2 is a dedicated resource of a feature combination of RedCap+CovEnh.

If the resource #2 is not configured, step S6015 is performed: The terminal device determines whether a resource #9 is configured. If the resource #2 is configured, step S6016 is performed: The terminal device selects an RO from the resource #2 to send a preamble.

The resource #9 is a dedicated resource of RedCap+slicing.

If the resource #9 is configured, step S6017 is performed: The terminal device selects an RO from the resource #9 to send a preamble. If the resource #9 is not configured, step S6018 is performed: The terminal device determines whether a resource #1 is configured.

The resource #1 is a dedicated resource of RedCap.

If the resource #1 is configured, step S6019 is performed: The terminal device selects an RO from the resource #1 to send a preamble. If the resource #1 is not configured, step S6020 is performed: The terminal device determines whether a resource #6 is configured.

The resource #6 is a dedicated resource of CovEnh+slicing in the dedicated resource.

If the resource #6 is configured, step S6021 is performed: The terminal device selects an RO from the resource #6 to send a preamble.

If the resource #6 is not configured, step S6023 is performed: The terminal device determines whether a resource #13 is configured. The resource #13 is a dedicated resource of CovEnh in the dedicated resource.

If the resource #13 is not configured, step S6024 is performed: The terminal device determines whether a resource #12 is configured. The resource #12 is a dedicated resource of slicing in the dedicated resource. When the resource #12 is configured, step S6025 is performed: The terminal device selects an RO from the resource #12 to send a preamble. Alternatively, when the resource #12 is not configured, step S6026 is performed: The terminal device selects an RO from a resource #3 to send a preamble, and the resource #3 is a legacy PRACH resource (that is, a non-RedCap dedicated resource).

If the resource #13 is configured, step S6022 is performed: The terminal device selects an RO from the resource #13 to send a preamble.

It may be understood that, compared with the resource selection procedure shown in FIG. 6(b), the resource selection procedure shown in FIG. 6(d) traverses more comprehensive feature combinations in the RACH resource selection procedure, so that the terminal device can select a dedicated resource of a feature combination that is closer to the feature combination that triggers the RACH.

Procedure 2: RACH fallback

If random access fails (for example, a random access preamble fails to be sent or contention resolution fails), the terminal device selects a random access resource.

For example, a process in which the terminal device selects the random access resource in the procedure 2 is described by using an example in which the first indication information indicates that a priority of a first feature is higher than a priority of a second feature, the terminal device supports at least the first feature and the second feature, and a trigger condition of the random access procedure includes at least the first feature and the second feature. The process includes:

the terminal device fails to perform random access on a second resource, and the second resource is a random access resource of the second feature combination including the first feature and the second feature.

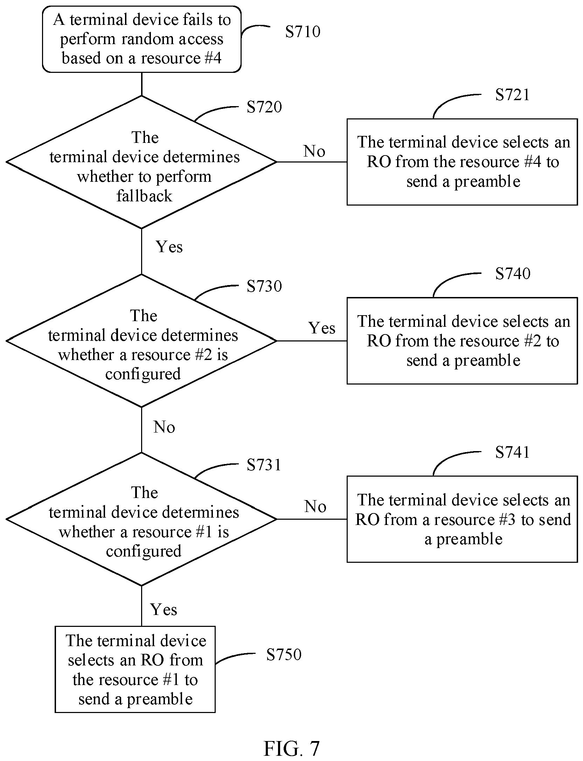

The terminal device determines that a first resource is configured, where the first resource is a random access resource of the first feature, or the first resource is a random access resource of the first feature combination including the first feature, and the random access resource is included in the first resource. The following uses a specific example to describe the procedure 2 in which the terminal device selects the random access resource. FIG. 7 is another schematic flowchart of selecting a random access resource by a terminal device.

A priority sequence of a plurality of features in a scenario shown in FIG. 7 is: RedCap>CovEnh>RAN slicing>SDT, the terminal device is RedCap UE, and the terminal device supports a RAN slicing feature and a CovEnh feature. A RACH procedure is triggered by a feature combination of RedCap+RACH slicing (slice group 1)+CovEnh.

The random access resource selection procedure includes the following steps.

S710: The terminal device fails to perform random access based on a resource #4.

For example, the terminal device fails to select an RO from the resource #4 to send a preamble. The resource #4 is a dedicated resource of a RedCap+CovEnh+slicing-related feature combination.

S720: The terminal device determines whether to perform fallback.

If the fallback is performed, step S730 is performed: The terminal device determines whether a resource #2 is configured. If the fallback is not performed, step S721 is performed: The terminal device selects an RO from the resource #4 to send a preamble.

The resource #2 is a dedicated resource of a RedCap+CovEnh-related feature combination.

If the resource #2 is configured, step S740 is performed: The terminal device selects an RO from the resource #2 to send a preamble. If the resource #2 is not configured, step S731 is performed: The terminal device determines whether a resource #1 is configured.

The resource #1 is a dedicated resource of RedCap or a dedicated resource of a RedCap-related feature combination.

If the resource #1 is configured, step S750 is performed: The terminal device selects an RO from the resource #1 to send a preamble. If the resource #1 is not configured, step S741 is performed: The terminal device selects an RO from a resource #3 to send a preamble. The resource #3 is a legacy PRACH resource (that is, a non-RedCap dedicated resource).

In the foregoing example, the resource #1, the resource #2, the resource #3, and the resource #4 include different ROs. If ROs of all or some resources in the resource #1, the resource #2, the resource #3, and the resource #4 are the same, and preambles are different, a behavior corresponding to the terminal device is selecting, from the RO, a to-be-sent preamble. In FIG. 6(a) to FIG. 6(d) and FIG. 7, how the terminal device selects the random access resource by using the priority sequence of the plurality of features is merely used as an example for description, and does not constitute any limitation on the protection scope of this application. The terminal device may further select the random access resource in another manner when the priority sequence of the plurality of features is considered. Details are not described herein again.

In addition, the foregoing procedure 1 and the foregoing procedure 2 may be separately performed, or may be performed in combination. For example, after performing the procedure 1, the terminal device may perform the fallback procedure shown in the procedure 2 if the terminal device fails to perform random access on the random access resource selected in the procedure 1.

It may be understood that, in the foregoing example, some features are used as an example, and a name of the feature is not limited. For example, RedCap may be replaced with a first feature, SDT may be replaced with a second feature, slicing may be replaced with a third feature, and CovEnh may be replaced with a fourth feature. The determining steps in the foregoing procedure 1 and the foregoing procedure 2 may be partially optional.

It should be noted that the random access resource selection procedures shown in the foregoing procedure 1 and the foregoing procedure 2 may be applicable to a terminal device in a non-connected mode. In this case, the terminal device needs to determine whether a dedicated RACH resource of a corresponding feature or feature combination is configured on an initial uplink BWP. The random access resource selection procedures shown in the foregoing procedure 1 and the foregoing procedure 2 may be further applicable to a terminal device in a connected mode. If the terminal device is in the connected mode (for example, an RRC_CONNECTED state), the dedicated resource determined in the foregoing resource selection manner may not be configured on a currently active BWP. In this case, the terminal device needs to determine whether the dedicated resource determined in the foregoing resource selection manner is configured on the active uplink BWP, and reselect a random access resource based on the priority sequence of the plurality of features or switch to the initial uplink BWP. The dedicated resource determined in the foregoing resource selection manner includes a dedicated resource determined in each step in the procedure.

In addition, it should be noted that, in the resource selection procedures shown in FIG. 6(a) to FIG. 6(d) and FIG. 7, that the priority sequences that are of the plurality of features and that are on which the terminal device are based in the procedure 1 and the procedure 2 may be the same is merely an example for description. This does not constitute any limitation on the protection scope of this application. In the foregoing procedure 1 and the foregoing procedure 2, the priority sequences that are of the plurality of features and that are on which the terminal device is based may also be different. To be specific, the priority sequences that are of the plurality of features, that are configured by the network device, and that are used for random access resource selection and RACH fallback resource selection may be the same (a same set of configurations of priority sequences of a plurality of features), or may be different (separately configured).

For example, the terminal device may separately select, from two sets of configurations of priority sequences that are of the plurality of features and that are configured by the network device, a priority sequence that is of the plurality of features and that is used for random access resource selection and a priority sequence that is of the plurality of features and that is used for RACH fallback resource selection.

For example, the network device may indicate, based on indication information, that one of the two sets of configurations of priority sequences of the plurality of features is used for random access resource selection, and the other set is used for RACH fallback resource selection.

For example, the terminal device maintains fourth indication information, where the fourth indication information indicates the terminal device to use the feature priority sequence of random access resource selection or the terminal device to use the feature priority sequence of RACH fallback resource selection. For example, if the terminal device determines to perform RACH fallback, the terminal device sets the fourth indication information as the feature priority sequence of RACH fallback resource selection; or if the terminal device determines to perform RACH resource selection, the terminal device sets the fourth indication information as the feature priority sequence of random access resource selection.

It should be understood that in the foregoing embodiment, that the network device determines the priority sequence of the plurality of features and configures the priority sequence of the plurality of features based on the first indication information is mainly used as an example for description, so that the terminal device can select the random access resource based on the priority sequence of the plurality of features. In another possible implementation, the network device may further determine a priority sequence of a plurality of feature combinations, and configure the priority sequence of the plurality of feature combinations based on indication information, so that the terminal device can select the random access resource based on the priority sequence of the plurality of feature combinations.

For example, the network device determines that the priority sequence of the plurality of feature combinations is SDT+RedCap>RedCap+CovEnh>CovEnh+slicing>SDT+slicing>SDT+CovEnh>RedCap+slicin g>SDT+Red-Cap+CovEnh>SDT+RedCap+slicing>SDT+CovEnh+slicing>RedCap+CovEnh+sli cing>SDT+REdCap+CovEnh+slicing.

When resource selection or RACH fallback is performed on a RACH triggered by the feature combination of RedCap+CovEnh+slicing, the terminal device may determine a random access resource based on priorities that are of the feature combinations and that are configured by the network device. For example, if the network device does not configure a dedicated resource of the feature combination of RedCap+CovEnh+slicing, or a RACH on the dedicated resource fails, because the feature combination of RedCap+CovEnh has a highest priority in the feature combination of RedCap+CovEnh, the feature combination of CovEnh+slicing, and the feature combination of RedCap+slicing, and if the network device configures a dedicated resource of the feature combination of RedCap+CovEnh, the terminal device selects the dedicated resource to initiate random access.

The priority of the feature combination may further include a two-step random access-related feature combination, for example, RedCap+SDT+2-step RACH.

Considering that signaling overheads of configuring, by the network device, feature combination priorities for all feature combinations may be large, the network device may further configure a feature priority of a feature combination set, and the feature combination set includes a plurality of features or feature priorities.

For another example, a feature combination set #1 includes RedCap and a RedCap-related feature combination (for example, SDT+RedCap, RedCap+slicing, and SDT+RedCap+CovEnh), and a feature combination set #2 includes slicing and a slicing-related feature combination (for example, SDT+slicing and CovEnh+slicing). A priority of the feature combination set #1 is higher than that of the feature combination set #2. A feature or feature combination included in the feature combination set may also be configured by the network device. The terminal device selects a random access resource based on the feature priority of the feature combination set. For example, the terminal device first selects the random access resource from a high-priority feature combination set based on a feature or a feature combination that triggers a RACH procedure, and selects the random access resource from a low-priority feature combination set only after no random access resource is selected from the high-priority feature combination set.

For example, a manner of configuring the priority of the feature combination is similar to a manner of configuring the priority of the feature, and includes but is not limited to the following manners:

Manner 1: The network device configures a dedicated resource and/or a dedicated parameter of a feature or feature combination 1 by using a field 1 (for example, FeatureCombinationPreamble-r17), and indicates a priority of the feature or feature combination 1.
For example, the field 1 is used to configure a value of the priority, and a priority relative relationship between different features or feature combinations is determined by using values of priorities of the different features or feature combinations.
Manner 2: The priority of the feature combination may be determined based on a priority of a feature included in the feature combination. For example, the priority of the feature combination is a sum of priorities of single features included in the feature combination. The network device indicates the priority of the feature (for example, a feature priority of RedCap is 5, and a feature priority of SDT is 4). The terminal device calculates a sum of priorities of features included in the feature combination, and uses the sum as the priority of the feature combination (a feature priority of RedCap+SDT is 9). It should be noted that the priority of the feature combination may be determined by performing another mathematical operation based on the priority of the feature included in the feature combination. For example, the priority of the feature combination is a priority with a highest priority in priorities of all features included in the feature combination or a priority with a lowest priority in priorities of all features included in the feature combination. A specific mathematical operation is not limited in this application. It may be understood that, compared with the manner 1, the manner 2 can reduce signaling overheads.
Manner 3: The network device may further indicate the priority of the feature combination by configuring a sequence of feature combinations. For example, if the network device may first configure a dedicated resource or a dedicated parameter of a feature combination 1, and then configure a dedicated resource or a dedicated parameter of a feature combination 2, it indicates that a feature combination priority of the feature combination 1 is higher than that of the feature combination 2.

For example, it may also be considered that the priority corresponds to a dedicated resource (or referred to as a RACH partition) of a feature (or a feature combination), that is, the network device configures a priority of the RACH partition.

When the network device does not configure a dedicated resource of a feature combination that triggers a RACH, the terminal device selects, based on a priority of the feature combination, a RACH resource from a subset of the feature combination that triggers the RACH.

For example, the network device configures the priorities as: RedCap+SDT (a priority is 6), RedCap+Slicing (a priority is 5), Slicing+SDT (a priority is 3), RedCap+CovEnh (a priority is 7), RedCap (a priority is 5), Slicing (a priority is 3), and SDT (a priority is 4).

The feature combination that triggers the RACH is RedCap+SDT+Slicing. It can be learned from the foregoing configuration that the network device does not configure a corresponding dedicated resource. The terminal device may select RedCap+SDT with a highest priority based on the priority of the feature combination (including the feature), and select a RACH resource or an RO from a dedicated resource of the feature combination of RedCap+SDT.

For example, when priorities of features (or feature combinations) or priorities of RACH partitions are equal, the terminal device may perform random RACH resource selection, perform RACH resource selection based on a quantity of included features, perform RACH resource selection based on a priority of a single feature combination included in the feature combination, or perform RACH resource selection from a feature combination subset of the feature combination that triggers the RACH in a manner in which RedCap and/or CovEnh are prioritized.

For example, the network device configures the priorities as: RedCap+SDT (a priority is 6), RedCap+Slicing (a priority is 5), Slicing+SDT (a priority is 3), RedCap+CovEnh (a priority is 6), RedCap (a priority is 6), Slicing (a priority is 5), and SDT (a priority is 4). The feature combination that triggers the RACH is RedCap+SDT+Slicing. It can be learned from the foregoing configuration that the network device does not configure a corresponding dedicated resource.

The terminal device may perform resource selection in the following manners, for example, including but not limited to any one of the following manners:

Manner 1: Perform random selection. When priorities of features (or feature combinations) or priorities of RACH partitions are equal, the terminal device selects a RACH resource from the features (or the feature combinations) or RACH partitions whose priorities are equal.

The terminal device randomly selects RedCap+SDT, RedCap+CovEnh, and RedCap with highest priorities from a subset of a feature combination that triggers a RACH. Implementation of the resource selection manner shown in the manner 1 is simple.

Method 2: Perform selection based on a quantity of included features. When priorities of features (or feature combinations) or priorities of RACH partitions are equal, the terminal device selects, from the feature combinations or RACH partitions with same priorities, a feature combination or RACH partition that includes a largest quantity of features. Optionally, when quantities of features included in the feature combinations or RACH partitions are equal, the terminal device may randomly select a feature combination or RACH partition from the feature combinations or the RACH partitions.

RedCap+SDT and RedCap+CovEnh include more features than RedCap. Therefore, the terminal device may preferentially select RedCap+SDT and RedCap+CovEnh. RedCap+SDT and RedCap+CovEnh may be selected randomly or according to the following manner 3 or manner 4. In the resource selection manner shown in the manner 2, a resource that meets more features may be selected as much as possible.

Method 3: Perform selection based on a priority of a single feature combination included in the feature combination. When priorities of features (or feature combinations) or priorities of RACH partitions are equal, the terminal device selects a feature combination with a larger feature priority of included features from the feature combination. Alternatively, when priorities of features (or feature combinations) or priorities of RACH partitions are equal, the terminal selects a feature combination with a maximum/minimum sum of feature priorities of included features. A larger value of the feature priority indicates a higher priority of the feature, or a smaller value of the feature priority indicates a higher priority of the feature.

Optionally, the condition used in the manner 3 may further include another condition. For example, quantities of features included in the feature combination are also equal.

The terminal device does not consider RedCap included in both RedCap+SDT and RedCap+CovEnh. Because a priority of CovEnh is higher than that of SDT, RedCap+CovEnh is selected. This is similar to calculating a sum of priorities of single features, selection is performed based on a value of the sum.

In the resource selection manner shown in the manner 3, a feature combination with a high priority of included features may be selected. Considering that the network device may configure a high-priority resource or provide a good service for a feature with a high priority, there is a high probability that the terminal device can enjoy the high-priority resource or service after accessing in the manner 3.

Manner 4: Prioritize RedCap and/or CovEnh. When priorities of features (or feature combinations) or priorities of RACH partitions are equal, the terminal device selects a feature combination including RedCap and/or CovEnh. If a plurality of feature combinations all include RedCap and/or CovEnh, the terminal device may perform random selection from the feature combinations, or perform selection according to the foregoing manner 2 or manner 3.

The terminal device may consider that identification of RedCap affects whether an uplink resource configuration of a Msg3 is properly allocated and whether CovEnh is performed affects whether the Msg3 is successfully sent. Therefore, the two features are preferentially used. The terminal device selects a dedicated resource of a feature combination of RedCap+CovEnh to perform a RACH.

Manner 5: Perform selection based on a time domain sequence of resource arrival. When priorities of features (or feature combinations) or priorities of RACH partitions are equal, a RACH resource that first arrives is selected from the feature combinations or RACH partitions whose priorities are equal.

For example, when the terminal device selects a resource to perform a RACH, priorities of RedCap+SDT and RedCap+CovEnh are equal, and RedCap+SDT arrives earlier than RedCap+CovEnh in time domain, the terminal device selects a dedicated resource of a feature combination of RedCap+SDT to perform the RACH. It should be noted that the slicing in the foregoing embodiment may specifically refer to one or more slices or slice groups.

Further, considering that the terminal device may perform a RACH for requesting coverage enhancement (CovEnh) in a connected mode, or when the terminal device is RedCap UE, the terminal device may perform a RACH in the connected mode (that is, the RedCap feature and/or the CovEnh feature may be applicable to the connected mode). Therefore, the network device may configure the priority of the feature or the feature combination used for the terminal device in the connected mode. For a specific configuration method, refer to the foregoing embodiment.

For ease of understanding, RedCap and CovEnh are used as an example to describe how the network device configures the priority of the feature or the feature combination used in the connected mode.

For example, if the network device configures a priority of RedCap>a feature priority of CovEnh, when the terminal device in the connected mode uses the feature combination of RedCap+CovEnh to trigger the RACH and the network does not configure a dedicated resource of RedCap+CovEnh, the terminal device should select a dedicated RACH resource of the RedCap feature based on the feature or the feature combination priority in the connected mode.

This application further provides a communication method, to determine a layer 2 buffer (Layer 2 buffer) size.

The following describes the communication method.

After a terminal device accesses a network device, data transmission may be performed between the terminal device and the network device. To ensure correct receiving and/or sending of data, a layer 2 buffer (Layer 2 buffer) size of the terminal device is determined. Specifically, a total layer 2 buffer size is defined as a sum of a quantity of bytes of data that can be stored in a radio link control (radio link control, RLC) transmission window, an RLC receive window, an RLC reassembly window, and a PDCP reordering window by the terminal device.

For example, a total layer 2 buffer size required in a multi-radio dual connectivity (multi-radio dual connectivity, MR-DC) and new radio dual connectivity (new radio dual connectivity, NR-DC) scenario is determined based on a maximum value in values calculated according to the following formula:

$$\text{MaxULDataRate\_MN*RLCRTT\_MN+MaxULDataRate\_SN*RLCRTT\_SN+MaxDL}$$
$$\text{DataRate\_SN*RLCRTT\_SN+MaxDLDataRate\_MN*(RLCRTT\_SN+X2/Xn delay+Queuing in}$$
$$\text{SN)} \hspace{3cm} \text{(Formula 1-1)}$$

MaxULDataRate_MN and MaxDLDataRate_MN are respectively a maximum uplink data rate and a maximum downlink data rate of a master node (master node, MN). MaxULDataRate_SN and MaxDLDataRate_SN are respectively a maximum uplink data rate and a maximum downlink data rate of a secondary node (secondary node, SN). RLCRTT_MN and RLCRTT_SN are respectively RLC round trip time (Round Trip Time, RTT) of the MN and RLC round trip time of the SN. X2/Xn delay refers to transmission time at an X2 or Xn interface. Queuing in SN indicates time for processing a data queue in the SN.

$$\text{MaxULDataRate\_MN*RLCRTT\_MN+MaxULDataRate\_SN*RLCRTT\_SN+MaxDL}$$
$$\text{DataRate\_MN*RLCRTT\_MN+MaxDLDataRate\_SN*(RLCRTT\_MN+X2/Xn delay+Queuing in}$$
$$\text{MN)} \hspace{3cm} \text{(Formula 1-2)}$$

MaxULDataRate_MN and MaxDLDataRate_MN are respectively a maximum uplink data rate and a maximum downlink data rate of a master node (MN). MaxULDataRate_SN and MaxDLDataRate_SN are respectively a maximum uplink data rate and a maximum downlink data rate of a secondary node (SN). RLCRTT_MN and RLCRTT_SN are respectively RLC round trip time (Round Trip Time, RTT) of the MN and RLC round trip time of the SN. X2/Xn delay refers to transmission time at an X2 or Xn interface. Queuing in SN indicates time for processing a data queue in the SN. For example, a total layer 2 buffer size required in non-MR-DC and non-NR-DC scenarios is determined based on a maximum value in values calculated according to the following formula:

$$\text{MaxDLDataRate*RLC RTT+MaxULDataRate*RLC RTT} \hspace{2cm} \text{(Formula 1-3)}$$

MaxDLDataRate and MaxULDataRate are respectively a maximum downlink data rate and a maximum uplink data rate. RLC RTT is RLC round-trip time.

If a secondary cell group (secondary cell group, SCG) is an NR cell group, X2/Xn delay+Queuing in SN=25 ms. If the SCG is an LTE cell group, X2/Xn delay+Queuing in SN=55 ms. If an MCG is an NR cell group, X2/Xn delay+Queuing in MN=25 ms. If the MCG is an LTE cell group, X2/Xn delay+Queuing in MN=55 ms. In addition, for the LTE cell group, RLC RTT is 75 ms.

For each frequency band combination in an MR-DC or NR frequency band combination supported by the terminal device and an applicable function set combination, a corresponding required total layer 2 buffer size may be obtained through calculation. A total layer 2 buffer size finally required by the terminal device is a maximum value in total layer 2 buffer sizes obtained through calculation for the foregoing combinations.

RLC RTT of a corresponding NR cell group is determined by RLC RTT corresponding to a minimum subcarrier spacing (subcarrier spacing, SCS) supported by a frequency band combination of the cell group and an applicable feature set combination. For details, see the following table 1.

**Table 1**

| SCS (kHz) | RLC RTT (ms) |
|---|---|
| 15 kHz | 50 |
| 30 kHz | 40 |
| 60 kHz | 30 |
| 120 kHz | 20 |

Calculation of the maximum rate is as follows:

When a given number of carriers in a frequency band or frequency band combination are aggregated, an approximate maximum data rate is calculated as follows:

$$\text{data rate(in Mbps)} = 10^{-6} \cdot \sum_{j=1}^{J} \left( v_{layers}^{(j)} \cdot Q_m^{(j)} \cdot f^{(j)} \cdot R_{max} \cdot \frac{N_{PRB}^{BW(j),\mu} \cdot 12}{T_s^\mu} \cdot \left( 1 - OH^{(j)} \right) \right)$$

(Formula 1-4)

J is a quantity of aggregated carriers in a frequency band or frequency band combination. $R_{max} = \frac{948}{1024}$ represents a maximum coding rate.

For a $j^{th}$ carrier, $v_{layers}^{(j)}$ represents a maximum quantity of layers supported by the terminal device on the carrier. $Q_m^{(j)}$ represents a maximum supported modulation order.

$f^{(j)}$ represents a scaling factor, and $f^{(j)}$ may be 1, 0.8, 0.75, 0.4, or the like.

$\mu$ represents a numerology (numerology) corresponding to a different subcarrier spacing. $T_s^\mu$ represents an average OFDM symbol duration of a subframe under $\mu$. For example, assuming that a cyclic prefix is a normal cyclic prefix, $T_s^\mu = \frac{10^{-3}}{14 \cdot 2^\mu}$. $N_{PRB}^{BW(j),\mu}$ represents a maximum allocated RB in bandwidth BW(j) under $\mu$, where *BW(j)* is maximum bandwidth supported by the terminal device in a given band or BC. For details, see the following table 2 and table 3.

**Table 2**

| SCS (kHz) | 5 MHz | 10 MHz | 15 MHz | 20 MHz | 25 MHz | 30 MHz | 40 MHz | 50 MHz | 60 MHz | 70 MHz | 80 MHz | 90 MHz | 100 MHz |
|---|---|---|---|---|---|---|---|---|---|---|---|---|---|
| | $N_{RB}$ | $N_{RB}$ | $N_{RB}$ | $N_{RB}$ | $N_{RB}$ | $N_{RB}$ | $N_{RB}$ | $N_{RB}$ | $N_{RB}$ | $N_{RB}$ | $N_{RB}$ | $N_{RB}$ | $N_{RB}$ |
| 15 | 25 | 52 | 79 | 106 | 133 | 160 | 216 | 270 | N/A | N/A | N/A | N/A | N/A |
| 30 | 11 | 24 | 38 | 51 | 65 | 78 | 106 | 133 | 162 | 189 | 217 | 245 | 273 |
| 60 | N/A | 11 | 18 | 24 | 31 | 38 | 51 | 65 | 79 | 93 | 107 | 121 | 135 |

**Table 3**

| SCS (kHz) | 50 MHz | 100 MHz | 200 MHz | 400 MHz |
|---|---|---|---|---|
| | $N_{RB}$ | $N_{RB}$ | $N_{RB}$ | $N_{RB}$ |
| 60 | 66 | 132 | 264 | N.A |
| 120 | 32 | 66 | 132 | 264 |

A value of $OH^{(j)}$ may be 0.14, 0.18, 0.08, 0.10, or the like based on different corresponding uplink and downlink frequency bands.

For a single carrier, the terminal device should support a data rate that is not less than the data rate calculated according to the foregoing formula, where $J = 1$, and $v_{layers}^{(j)} \cdot Q_m^{(j)} \cdot f^{(j)}$ is not less than 4.

For a cell running an SUL, only one of UL and SUL carriers (a carrier with a higher data rate) is calculated.

However, for a high-frequency carrier (for example, an FR2-2 high-frequency carrier greater than 71 GHz), larger subcarrier spacings, that are, a 480 kHz SCS and a 960 kHz SCS, are introduced.

According to the foregoing formula for calculating the required total layer 2 buffer size, the buffer size is determined by RLC RTT and a maximum data rate supported by a DL/UL. In addition, the maximum data rate supported by the DL/UL is determined by maximum bandwidth supported by UE in a given frequency band or frequency band combination. The RLC RTT corresponds to a minimum SCS supported by a carrier in the frequency band combination.

For example, it is assumed that the terminal device supports a combination of a frequency band 1 and a frequency band 2, and it is assumed that an SCS of the frequency band 1 is 15 kHz and an SCS of the frequency band 2 is 120 kHz. When determining a required maximum layer 2 buffer, the terminal device performs calculation based on RLC RTT corresponding to the SCS of 15 kHz. That is, 50 ms is used for calculation according to the foregoing formula.

When the terminal device uses a high-frequency carrier (for example, the FR2-2 high-frequency carrier mentioned above), because the carrier supports larger available bandwidth, a supported maximum data rate is higher. Different from previous carrier aggregation between low frequency bands, during carrier aggregation between a low-frequency carrier and the high-frequency carrier, because a difference between maximum data transmission rates supported by the two carriers is greater, a layer 2 buffer size of the terminal device determined in the foregoing manner of determining the layer 2 buffer size is extremely large, and finally costs of the terminal device are increased.

For example, it is assumed that the terminal device supports a combination of a frequency band 3 and a frequency band 4 in an NR cell group. It is assumed that the frequency band 3 is a low-frequency carrier (for example, a 700 MHz carrier), and an SCS corresponding to the frequency band 3 is 15 kHz; and the frequency band 4 is a high-frequency carrier (for example, a 71 GHz carrier), and an SCS corresponding to the frequency band 4 is 960 kHz. It is assumed that a maximum data rate supported by the 700 MHz carrier is 300 Mbps, and a maximum quantity supported by the 71 GHz carrier is 20 Gbps. If the terminal device determines the layer 2 buffer size in the foregoing manner of determining the layer 2 buffer size, the terminal device needs to use RLC RTT corresponding to 15 kHz, that is, 50 ms, to calculate the layer 2 buffer size. In this case, because a maximum peak rate that can be reached by using the high-frequency carrier of the frequency band 4 is very high, and large RLC RTT of 50 ms is used, a finally determined layer 2 buffer size is very large. However, to some extent, RLC RTT corresponding to an SCS of 960 kHz may be reduced to, for example, 4 ms or 5 ms. Therefore, nearly 10 times of differences may exist between the layer 2 buffer size determined by using RLC RTT of 50 ms and a layer 2 buffer size determined by using RLC RTT of 5 ms. Consequently, overheads of the layer 2 buffer are very large, and costs of the terminal device are greatly increased.

To resolve a problem that the layer 2 buffer is excessively large due to the foregoing manner of determining the layer 2 buffer size, a method of grouping SCSs may be used to reduce the layer 2 buffer size. Subcarrier spacings (Sub-Carrier Spacing, SCS) may be divided into two or more groups. When determining the layer 2 buffer size, the terminal device determines, based on respective SCSs corresponding to a plurality of frequency bands or a plurality of frequency band combinations in the cell group, an SCS group to which each SCS belongs. After determining SCS groups to which the plurality of frequency bands or the plurality of frequency band combinations belong, the UE selects, in each SCS group, RLC RTT corresponding to a smallest SCS of the frequency band or the frequency band combination, to calculate the layer 2 buffer size.

Specifically, a mapping relationship between the SCS and the SCS group may be fixed in a protocol, or may be delivered to the terminal device after being determined by the network device.

For example, in the following Table 4, SCSs of 15 kHz, 30 kHz, 60 kHz, and 120 kHz form an SCS group. SCSs of 240 kHz, 480 kHz, and 960 kHz form another SCS group.

**Table 4**

| SCS (kHz) | RLC RTT (ms) | SCS group |
|-----------|--------------|-----------|
| 15 kHz | 50 | Group 1 |
| 30 kHz | 40 | |
| 60 kHz | 30 | |
| 120 kHz | 20 | |
| 240 kHz | 13 | Group 2 |
| 480 kHz | 8 | |
| 960 kHz | 4 | |

Table 4 is used as an example. It is assumed that the terminal device supports a combination of a frequency band 1 and a frequency band 2 and a combination of a frequency band 3 and a frequency band 4. Assuming that SCSs of the frequency band 1 and the frequency band 2 are 30 kHz and 60 kHz, and SCSs corresponding to the frequency band 3 and the frequency band 4 are 240 kHz and 960 kHz, the terminal device determines that the SCSs of the frequency band 1 and the frequency band 2 belong to an SCS group 1, and the SCSs of the frequency band 3 and the frequency band 4 belong to an SCS group 2. Further, the terminal device determines that RLC RTT corresponding to a minimum SCS in the SCS group 1, that is, 30 kHz is used to calculate the layer 2 buffer size. In addition, the terminal device determines that RLC RTT corresponding to a smallest SCS in the SCS group 2, that is, 240 kHz is used to calculate the layer 2 buffer size.

RLC RTT of a corresponding NR cell group is determined based on RLC RTT corresponding to a smallest SCS in an SCS group to which an SCS supported in some or all frequency band combinations of the cell group and in an applicable feature set combination belongs. Alternatively, the RLC RTT of the corresponding NR cell group is determined based on RLC RTT corresponding to a smallest SCS in an SCS group to which an SCS supported in some or all frequency band combinations of the cell group belongs.

In a possible implementation, for a cell group in NR, the terminal device may calculate and determine the layer 2 buffer size according to the following formula:

$$\sum_i^N MaxDLDataRate(i) * RLCRTT(i) + MaxULDataRate(i) * RLCRTT(i) \quad \text{(Formula 1-4)}$$

N is a quantity of SCS groups supported by the UE. MaxDLDataRate (i) is a maximum downlink data rate supported on a frequency band or a frequency band combination of an $i^{th}$ SCS group to which an SCS belongs. A specific maximum rate may be calculated according to the foregoing formula for calculating the maximum rate. MaxULDataRate (i) is a maximum uplink data rate supported on a frequency band or frequency combination of an $i^{th}$ SCS group to which an SCS belongs. A specific maximum rate may be calculated according to the foregoing formula for calculating the maximum rate. RLCRTT(i) is RLC RTT corresponding to a frequency band or a frequency combination of an $i^{th}$ SCS group to which an SCS belongs. i is an integer greater than or equal to 0, $0 \leq i \leq N-1$, or $1 \leq i \leq N$.

In another possible implementation, the layer 2 buffer size may also be calculated and determined by using the following formula:

$$\sum_i^N MaxDLDataRate * RLCRTT(i) + MaxULDataRate * RLCRTT(i) \quad \text{(Formula 1-5)}$$

MaxDLDataRate is a maximum downlink data rate supported by the UE, and a specific maximum rate may be calculated according to the foregoing maximum rate calculation formula. MaxULDataRate is a maximum uplink data rate supported by the UE, and a specific maximum rate may be calculated according to the foregoing maximum rate calculation formula. RLCRTT(i) is RLC RTT corresponding to a frequency band or a frequency combination of an $i^{th}$ SCS group to which an SCS belongs.

Which one of the foregoing two implementations is used may be agreed in a standard, or the network device may indicate a manner to be used by the terminal device.

In the foregoing manner of grouping the SCSs, a problem that an excessively large layer 2 buffer is caused because improper RLC RTT is used when the terminal device aggregates the high-frequency or ultra-high-frequency carrier can be avoided.

It should be further understood that a value of a sequence number of each of the foregoing processes does not mean an order of an execution sequence. The execution sequence of each process should be determined based on a function and internal logic of each process, and should not be construed as any limitation on the implementation processes of embodiments of this application.

It should be further understood that in embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

It should be further understood that in some of the foregoing embodiments, a device (for example, a network device or a terminal device) in an existing network architecture is mainly used as an example for description. It should be understood that a specific form of the device is not limited in embodiments of this application. For example, all devices that can implement a same function in the future are applicable to embodiments of this application.

It may be understood that, in the foregoing method embodiments, methods and operations implemented by the network device may also be implemented by components applicable to the network device. Methods and operations implemented by the terminal device may also be implemented by components applicable to the terminal device.

The foregoing describes in detail the random access method provided in embodiments of this application with reference to FIG. 5. The foregoing random access method is mainly described from a perspective of interaction between the network device and the terminal device. It can be understood that to implement the foregoing functions, the network device and the terminal device include corresponding hardware structures and/or software modules for implementing the functions.

A person skilled in the art should be able to be aware that, in combination with the examples described in embodiments disclosed in this specification, units and algorithm steps can be implemented by hardware or a combination of hardware and computer software in this application. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

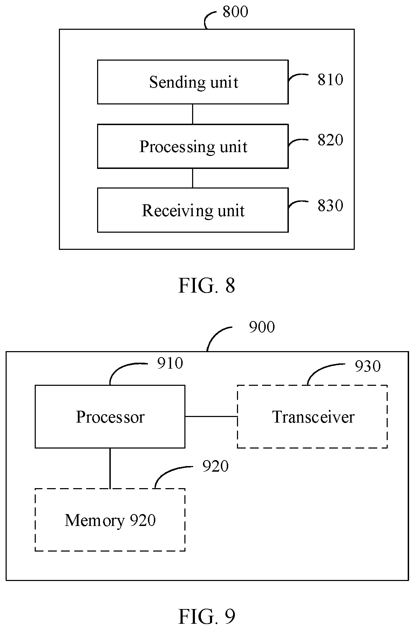

The following describes in detail communication apparatuses provided in embodiments of this application with reference to FIG. 8 and FIG. 9. It should be understood that descriptions of apparatus embodiments correspond to the descriptions of the method embodiments. Therefore, for content that is not described in detail, refer to the foregoing method embodiments. For brevity, some content is not described again.

In embodiments of this application, the transmit end device or the receive end device may be divided into function modules based on the foregoing method example. For example, each function module may be obtained through division corresponding to each function, or two or more functions may be integrated in one processing module. The integrated module may be implemented in a form of hardware, or may be implemented in a form of a software functional module. It should be noted that, in embodiments of this application, module division is an example, and is merely a logical function division. In actual implementation, another division manner may be used. An example in which each functional module is obtained through division based on each corresponding function is used below for description.

FIG. 8 is a schematic block diagram of an apparatus 800 according to an embodiment of this application. The apparatus 800 includes a sending unit 810, a processing unit 820, and a receiving unit 830. The sending unit 810 and the receiving unit 830 may implement a corresponding communication function, and the processing unit 820 is configured to process data. The sending unit 810 and the receiving unit 830 may also be referred to as a communication interface or a communication unit.

Optionally, the apparatus 800 may further include a storage unit. The storage unit may be configured to store instructions and/or data. The processing unit 820 may read the instructions and/or the data in the storage unit, to enable the apparatus to implement the foregoing method embodiments.

The apparatus 800 may be configured to perform an action performed by a device (for example, a network device or a terminal device) in the foregoing method embodiments. In this case, the apparatus 800 may be a device or a component that can be configured in the device. The sending unit 810 and the receiving unit 830 are configured to perform a receiving and sending related operation of the device in the foregoing method embodiments. The processing unit 820 is configured to perform a device processing related operation in the foregoing method embodiments.

In a design, the apparatus 800 is configured to perform an action performed by the network device in the method embodiments.

The processing unit 820 is configured to determine a priority sequence of a plurality of features, where the priority sequence of the plurality of features is used for random access resource selection.

The sending unit 810 is configured to send first indication information to a terminal device, where the first indication information indicates the priority sequence of the plurality of features.

Optionally, the sending unit 810 is further configured to send second indication information to the terminal device, where the second indication information indicates effective duration of the priority sequence of the plurality of features.

Optionally, the receiving unit 830 is further configured to receive third indication information from the terminal device, where the third indication information indicates a priority sequence that is of the plurality of features and that is expected by the terminal device.

Optionally, the sending unit 810 is further configured to send a third message to a first network device, where the third message is used to request to obtain an internet protocol IP address, and the IP address is an IP address of a second terminal device in a first communication group.

The apparatus 800 may implement a step or a procedure performed by the network device in the method embodiments in embodiments of this application, and the communication apparatus 800 may include a unit configured to perform the method performed by the network device in the method embodiments. In addition, the units in the apparatus 800 and the foregoing other operations and/or functions are separately used to implement a corresponding procedure of the method embodiment in the network device in the method embodiment.

When the apparatus 800 is configured to perform the method in FIG. 5, the sending unit 810 may be configured to perform the step of sending information in the method, for example, steps S520 and S521. The receiving unit 830 may be configured to perform the step of receiving information in the method, for example, step S511. The processing unit 820 may be configured to perform the processing step in the method, for example, step S510.

It should be understood that a specific process in which the units perform the foregoing corresponding steps is described in detail in the foregoing method embodiments. For brevity, details are not described herein.

In another design, the apparatus 800 is configured to perform an action performed by the terminal device in the method embodiments.

The receiving unit 830 is configured to receive first indication information from a network device, where the first indication information indicates a priority sequence of a plurality of features.

The processing unit 820 is configured to determine the priority sequence of the plurality of features based on the first indication information, where the priority sequence of the plurality of features is used for random access resource selection.

Optionally, the receiving unit 830 is further configured to receive second indication information from the network device, where the second indication information indicates effective duration of the priority sequence of the plurality of features.

Optionally, the sending unit 810 is further configured to send third indication information to the network device, and the third indication information indicates a priority sequence that is of the plurality of features and that is expected by the terminal device.

Optionally, the processing unit 820 is further configured to select a random access resource based on the first indication information.

The apparatus 800 may implement a step or a procedure performed by the terminal device in the method embodiments in embodiments of this application, and the communication apparatus 800 may include a unit configured to perform the method performed by the terminal device in the method embodiments of this application. In addition, the units in the apparatus 800 and the foregoing other operations and/or functions are separately used to implement a corresponding procedure of the method embodiment in the terminal device in the method embodiment.

When the apparatus 800 is configured to perform the method in FIG. 5, the receiving unit 830 may be configured to perform the step of receiving information in the method, for example, steps S520 and S521. The sending unit 810 may be configured to perform the step of sending information in the method, for example, step S511. The processing unit 820 may be configured to perform the processing step in the method, for example, step S530.

It should be understood that a specific process in which the units perform the foregoing corresponding steps is described in detail in the foregoing method embodiments. For brevity, details are not described herein.

The processing unit 820 in the foregoing embodiment may be implemented by at least one processor or a processor-related circuit. The sending unit 810 and the receiving unit 830 may be implemented by a transceiver or a transceiver-related circuit. The storage unit may be implemented by at least one memory.

As shown in FIG. 7, an embodiment of this application further provides an apparatus 700. The apparatus 700 includes a processor 710, and may further include one or more memories 720. The processor 710 is coupled to the memory 720. The memory 720 is configured to store a computer program or instructions and/or data. The processor 710 is configured to execute the computer program or the instructions and/or the data stored in the memory 720, so that the method in the foregoing method embodiment is performed. Optionally, the apparatus 700 includes one or more processors 710.

Optionally, the memory 720 and the processor 710 may be integrated together, or disposed separately.

Optionally, as shown in FIG. 7, the apparatus 700 may further include a transceiver 730, and the transceiver 730 is configured to receive and/or send a signal. For example, the processor 710 is configured to control the transceiver 730 to receive and/or send a signal.

In a solution, the apparatus 700 is configured to implement operations performed by the device (for example, the foregoing network device or terminal device) in the foregoing method embodiments.

An embodiment of this application further provides a computer-readable storage medium. The computer-readable storage medium stores computer instructions used to implement the method performed by the device (for example, the foregoing network device or terminal device) in the foregoing method embodiments.

For example, when the computer program is executed by a computer, the computer is enabled to implement the method performed by the network device in the foregoing method embodiments.

An embodiment of this application further provides a computer program product including instructions. When the instructions are executed by a computer, the computer is enabled to implement the method performed by the device (for example, the foregoing network device or terminal device) in the foregoing method embodiments.

An embodiment of this application further provides a communication system. The communication system includes the device (for example, the foregoing network device or terminal device) in the foregoing method embodiments.

For explanations and beneficial effects of related content of any one of the apparatuses provided above, refer to the corresponding method embodiment provided above. Details are not described herein again.

It should be understood that, the processor mentioned in embodiments of this application may be a central processing unit (central processing unit, CPU), or may further be another general-purpose processor, a digital signal processor (digital signal processor, DSP), an application-specific integrated circuit (application specific integrated circuit, ASIC), a field programmable gate array (field programmable gate array, FPGA), or another programmable logic device, a discrete gate or transistor logic device, a discrete hardware component, or the like. The general-purpose processor may be a microprocessor, or the processor may be any conventional processor or the like.

It should be further understood that the memory mentioned in embodiments of this application may be a volatile memory and/or a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example and not limitation, the RAM may include the following plurality of forms: a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA, another programmable logic device, a discrete gate or a transistor logic device, or a discrete hardware component, the memory (storage module) may be integrated into the processor.

It should be further noted that the memory described in this specification is intended to include, but is not limited to, these memories and any other memory of a suitable type.

A person of ordinary skill in the art may be aware that, in combination with the examples described in embodiments disclosed in this specification, units and methods may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the protection scope of this application.

In the several embodiments provided in this application, it should be understood that the disclosed apparatus and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electronic form, a mechanical form, or another form.

The units described as separate parts may or may not be physically separate, and parts displayed as units may or may not be physical units, may be located in one position, or may be distributed on a plurality of network units. Some or all of the units may be selected based on actual requirements to implement the solutions provided in this application.

In addition, functional units in embodiments of this application may be integrated into one unit, each of the units may exist alone physically, or two or more units may be integrated into one unit.

All or some of the foregoing embodiments may be implemented by using software, hardware, firmware, or any combination thereof. When software is used to implement embodiments, all or a part of embodiments may be implemented in a form of a computer program product. The computer program product includes one or more computer instructions.

When the computer program instructions are loaded and executed on the computer, the procedure or functions according to embodiments of this application are all or partially generated. The computer may be a general-purpose computer, a dedicated computer, a computer network, or another programmable apparatus. For example, the computer may be a personal computer, a server, a network device, or the like. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like. For example, the usable medium may include but is not limited to any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A random access method, comprising:

   receiving, by a terminal device, first indication information from a network device, wherein the first indication information indicates a priority sequence of a plurality of features; and
   determining, by the terminal device, the priority sequence of the plurality of features based on the first indication information, wherein the priority sequence of the plurality of features is used for random access resource selection.

2. The method according to claim 1, wherein different features in the plurality of features meet at least one of the following:
   the different features correspond to different service requirements, the different features correspond to different transmission manners, the different features correspond to different device types, the different features correspond to different application scenarios, or the different features correspond to different functions.

3. The method according to claim 1 or 2, wherein the first indication information is comprised in a system message and/or dedicated signaling.

4. The method according to any one of claims 1 to 3, wherein the method further comprises:
   receiving, by the terminal device, second indication information from the network device, wherein the second indication information indicates effective duration of the priority sequence of the plurality of features.

5. The method according to any one of claims 1 to 4, wherein before the receiving, by a terminal device, first indication information from a network device, the method further comprises:
   sending, by the terminal device, third indication information to the network device, wherein the third indication information indicates a priority sequence that is of the plurality of features and that is expected by the terminal device.

6. The method according to any one of claims 1 to 5, wherein the method further comprises:
   selecting, by the terminal device, a random access resource based on the priority sequence of the plurality of features.

7. The method according to claim 6, wherein the first indication information indicates that a priority of a first feature is higher than a priority of a second feature; and
   the selecting, by the terminal device, a random access resource based on the first indication information comprises:

   determining, by the terminal device, that a first resource is configured, wherein the first resource is a random access resource of the first feature, or the first resource is a random access resource of a first feature combination comprising the first feature; and

determining, by the terminal device, that a second resource is configured in the first resource, wherein the second resource is a random access resource of a second feature combination comprising the first feature and the second feature, and the random access resource is comprised in the second resource.

8. The method according to claim 6 or 7, wherein the first indication information indicates that the priority of the first feature is higher than the priority of the second feature, and the method further comprises:

the terminal device fails to perform random access on the second resource, and the second resource is the random access resource of the second feature combination comprising the first feature and the second feature; and

the selecting, by the terminal device, a random access resource based on the priority sequence of the plurality of features comprises:

determining, by the terminal device, that the first resource is configured, wherein the first resource is the random access resource of the first feature, or the first resource is the random access resource of the first feature combination comprising the first feature, and the random access resource is comprised in the first resource.

9. The method according to any one of claims 6 to 8, wherein before the selecting, by the terminal device, a random access resource based on the priority sequence of the plurality of features, the method further comprises:

determining, by the terminal device, that no dedicated resource of a feature combination that triggers a random access procedure is configured.

10. The method according to any one of claims 1 to 9, wherein that the first indication information indicates a priority sequence of a plurality of features comprises:

the first indication information indicates a sequence of the plurality of features, and the sequence of the plurality of features is used to determine the priority sequence of the plurality of features; or

the first indication information indicates priority information of the plurality of features, the priority information comprises priority information of at least one feature in the plurality of features, and the priority information is used to determine the priority sequence of the plurality of features.

11. A random access method, comprising:

determining, by a network device, a priority sequence of a plurality of features, wherein the priority sequence of the plurality of features is used for random access resource selection; and

sending, by the network device, first indication information to a terminal device, wherein the first indication information indicates the priority sequence of the plurality of features.

12. The method according to claim 11, wherein different features in the plurality of features meet at least one of the following:

the different features correspond to different service requirements, the different features correspond to different transmission manners, the different features correspond to different device types, the different features correspond to different application scenarios, or the different features correspond to different functions.

13. The method according to claim 11 or 12, wherein the first indication information is comprised in a system message and/or dedicated signaling.

14. The method according to any one of claims 11 to 13, wherein the method further comprises:

sending, by the network device, second indication information to the terminal device, wherein the second indication information indicates effective duration of the priority sequence of the plurality of features.

15. The method according to any one of claims 11 to 14, wherein before the sending, by the network device, first indication information to a terminal device, the method further comprises:

receiving, by the network device, third indication information from the terminal device, wherein the third indication information indicates a priority sequence that is of the plurality of features and that is expected by the terminal device.

16. The method according to any one of claims 11 to 15, wherein that the first indication information indicates the priority sequence of the plurality of features comprises:

the first indication information indicates a sequence of the plurality of features, and the sequence of the plurality of features is used to determine the priority sequence of the plurality of features; or

the first indication information indicates priority information of the plurality of features, the priority information comprises priority information of at least one feature in the plurality of features, and the priority information is used to determine the priority sequence of the plurality of features.

17. A random access apparatus, comprising:

a receiving unit, configured to receive first indication information from a network device, wherein the first indication information indicates a priority sequence of a plurality of features; and

a processing unit, configured to determine the priority sequence of the plurality of features based on the first indication information, wherein the priority sequence of the plurality of features is used for random access resource selection.

18. The apparatus according to claim 17, wherein different features in the plurality of features meet at least one of the following:

the different features correspond to different service requirements, the different features correspond to different transmission manners, the different features correspond to different device types, the different features correspond to different application scenarios, or the different features correspond to different functions.

19. The apparatus according to claim 17 or 18, wherein the first indication information is comprised in a system message and/or dedicated signaling.

20. The apparatus according to any one of claims 17 to 19, wherein the receiving unit is further configured to receive second indication information from the network device, and the second indication information indicates effective duration of the priority sequence of the plurality of features.

21. The apparatus according to any one of claims 17 to 20, wherein the apparatus further comprises:
a sending unit, configured to send third indication information to the network device, wherein the third indication information indicates a priority sequence that is of the plurality of features and that is expected by the terminal device.

22. The apparatus according to any one of claims 17 to 21, wherein the processing unit is further configured to select a random access resource based on the priority sequence of the plurality of features.

23. The apparatus according to claim 22, wherein the first indication information indicates that a priority of a first feature is higher than a priority of a second feature; and
that the processing unit selects a random access resource based on the priority sequence of the plurality of features comprises:

the processing unit determines that a first resource is configured, wherein the first resource is a random access resource of the first feature, or the first resource is a random access resource of a first feature combination comprising the first feature; and

the processing unit determines that a second resource is configured in the first resource, wherein the second resource is a random access resource of a second feature combination comprising the first feature and the second feature, and the random access resource is comprised in the second resource.

24. The apparatus according to claim 22 or 23, wherein the first indication information indicates that the priority of the first feature is higher than the priority of the second feature, the apparatus fails to perform random access on the second resource, and the second resource is the random access resource of the second feature combination comprising the first feature and the second feature; and
that the processing unit selects a random access resource based on the priority sequence of the plurality of features comprises:
the processing unit determines that the first resource is configured, wherein the first resource is the random access resource of the first feature, or the first resource is the random access resource of the first feature combination comprising the first feature, and the random access resource is comprised in the first resource.

25. The apparatus according to any one of claims 22 to 24, wherein before the apparatus selects the random access resource based on the priority sequence of the plurality of features, the processing unit is further configured to determine that no dedicated resource of a feature combination that triggers a random access procedure is configured.

26. The apparatus according to any one of claims 17 to 25, wherein that the first indication information indicates a priority sequence of a plurality of features comprises:

the first indication information indicates a sequence of the plurality of features, and the sequence of the plurality of features is used to determine the priority sequence of the plurality of features; or
the first indication information indicates priority information of the plurality of features, the priority information comprises priority information of at least one feature in the plurality of features, and the priority information is used to determine the priority sequence of the plurality of features.

27. A random access apparatus, comprising:

a processing unit, configured to determine a priority sequence of a plurality of features, wherein the priority sequence of the plurality of features is used for random access resource selection; and
a sending unit, configured to send first indication information to a terminal device, wherein the first indication information indicates the priority sequence of the plurality of features.

28. The apparatus according to claim 27, wherein different features in the plurality of features meet at least one of the following:
the different features correspond to different service requirements, the different features correspond to different transmission manners, the different features correspond to different device types, the different features correspond to different application scenarios, or the different features correspond to different functions.

29. The apparatus according to claim 27 or 28, wherein the first indication information is comprised in a system message and/or dedicated signaling.

30. The apparatus according to any one of claims 27 to 29, wherein the sending unit is further configured to send second indication information to the terminal device, and the second indication information indicates effective duration of the priority sequence of the plurality of features.

31. The apparatus according to any one of claims 27 to 30, wherein the apparatus further comprises:
a receiving unit, configured to receive third indication information from the terminal device, wherein the third indication information indicates a priority sequence that is of the plurality of features and that is expected by the terminal device.

32. The apparatus according to any one of claims 27 to 31, wherein that the first indication information indicates the priority sequence of the plurality of features comprises:

the first indication information indicates a sequence of the plurality of features, and the sequence of the plurality of features is used to determine the priority sequence of the plurality of features; or
the first indication information indicates priority information of the plurality of features, the priority information comprises priority information of at least one feature in the plurality of features, and the priority information is used to determine the priority sequence of the plurality of features.

33. A communication apparatus, comprising:

a memory, configured to store a computer program; and
a processor, configured to execute the computer program stored in the memory, so that the communication apparatus performs the method according to any one of claims 1 to 10.

34. A communication apparatus, comprising:

a memory, configured to store a computer program; and
a processor, configured to execute the computer program stored in the memory, so that the communication apparatus performs the method according to any one of claims 11 to 16.

35. A computer-readable storage medium, wherein the computer-readable storage medium stores computer instructions, and when the computer instructions are run on a computer, the method according to any one of claims 1 to 10 is performed.

36. A computer-readable storage medium, wherein the computer-readable storage medium stores computer instructions, and when the computer instructions are run on a computer, the method according to any one of claims 11 to 16 is performed.

37. A chip, comprising a processor, configured to invoke a computer program from a memory and run the computer program, to enable a terminal device on which the chip is installed to perform the method according to any one of claims 1 to 10.

38. A chip, comprising a processor, configured to invoke a computer program from a memory and run the computer program, to enable a network device on which the chip is installed to perform the method according to any one of claims 11 to 16.

39. A computer program, wherein when the computer program is executed by a terminal device, the method according to any one of claims 1 to 10 is implemented.

40. A computer program, wherein when the computer program is executed by a network device, the method according to any one of claims 11 to 16 is implemented.

FIG. 1

(a)

(b)

(c)

(d)

FIG. 2

FIG. 3

FIG. 4

FIG. 5

Start a RACH resource selection procedure — S610

A terminal device determines whether a resource #1 is configured — S620

No → The terminal device selects an RO from a resource #3 to send a preamble — S621

Yes ↓

The terminal device determines whether a resource #2 is configured — S630

No → The terminal device selects an RO from a resource #5 to send a preamble — S631

Yes ↓

The terminal device determines whether a resource #4 is configured — S640

No → The terminal device selects an RO from the resource #2 to send a preamble — S641

Yes ↓

The terminal device selects an RO from the resource #4 to send a preamble — S650

FIG. 6(a)

```
                    ┌─────────────────┐
                    │   Start a RACH  │ ─── S611
                    │ resource selection │
                    │    procedure    │
                    └─────────────────┘
                             │
                             │
                        ╱─────────╲                                    ┌─────────────────┐
                       ╱  A terminal ╲ ─── S612                        │  The terminal device │ ─── S614
                      ╱ device determines whether a ╲      Yes         │  selects an RO from the │
                      ╲  resource #4 is           ╱ ──────────────────▶│  resource #4 to send a │
                       ╲  configured  ╱                                │     preamble     │
                        ╲─────────╱                                    └─────────────────┘
                             │
                            No
                             │
                        ╱─────────╲                                    ┌─────────────────┐
                       ╱ The terminal ╲ ─── S613                       │  The terminal device │ ─── S616
                      ╱ device determines whether a ╲      Yes         │  selects an RO from the │
                      ╲  resource #2 is           ╱ ──────────────────▶│  resource #2 to send a │
                       ╲  configured  ╱                                │     preamble     │
                        ╲─────────╱                                    └─────────────────┘
                             │
                            No
                             │
                        ╱─────────╲                                    ┌─────────────────┐
                       ╱ The terminal ╲ ─── S615                       │  The terminal device │ ─── S618
                      ╱ device determines whether a ╲      No          │  selects an RO from a │
                      ╲  resource #1 is           ╱ ──────────────────▶│  resource #3 to send a │
                       ╲  configured  ╱                                │     preamble     │
                        ╲─────────╱                                    └─────────────────┘
                             │
                            Yes
                             │
                    ┌─────────────────┐
                    │  The terminal device │
                    │ selects an RO from the │ ─── S617
                    │  resource #1 to send a │
                    │     preamble     │
                    └─────────────────┘
```

FIG. 6(b)

The terminal device selects an RO from the resource #6 to send a preamble — S607

Yes

S604

The terminal device determines whether a resource #6 is configured

No

The terminal device selects an RO from a resource #13 to send a preamble — S608

Yes

Yes

The terminal device selects an RO from the resource #12 to send a preamble — S6043

Start a RACH resource selection procedure — S601

S602

S6041

S6042

A terminal device determines whether a resource #1 is configured

No

The terminal device determines whether a resource #11 is configured

No

The terminal device determines whether a resource #12 is configured

No

The terminal device selects an RO from a resource #3 to send a preamble — S6044

Yes

TO
FIG. 6(c)-2

FIG. 6(c)-1

FIG. 6(c)-2

EP 4 412 380 A1

Start a RACH resource selection procedure — S6011

A terminal device determines whether a resource #4 is configured — S6012

Yes → The terminal device selects an RO from the resource #4 to send a preamble — S6014

No

The terminal device determines whether a resource #2 is configured — S6013

Yes → The terminal device selects an RO from the resource #2 to send a preamble — S6016

No

The terminal device determines whether a resource #9 is configured — S6015

Yes → The terminal device selects an RO from the resource #9 to send a preamble — S6017

No

The terminal device determines whether a resource #1 is configured — S6018

Yes → The terminal device selects an RO from the resource #1 to send a preamble — S6019

No

The terminal device determines whether a resource #6 is configured — S6020

Yes → The terminal device selects an RO from the resource #6 to send a preamble — S6021

No

The terminal device determines whether a resource #13 is configured — S6023

Yes → The terminal device selects an RO from the resource #13 to send a preamble — S6022

No

The terminal device determines whether a resource #12 is configured — S6024

Yes → The terminal device selects an RO from the resource #12 to send a preamble — S6025

No

The terminal device selects an RO from a resource #3 to send a preamble — S6026

FIG. 6(d)

A terminal device fails to perform random access based on a resource #4 — S710

↓

The terminal device determines whether to perform fallback — S720

— No → The terminal device selects an RO from the resource #4 to send a preamble — S721

↓ Yes

The terminal device determines whether a resource #2 is configured — S730

— Yes → The terminal device selects an RO from the resource #2 to send a preamble — S740

↓ No

The terminal device determines whether a resource #1 is configured — S731

— No → The terminal device selects an RO from a resource #3 to send a preamble — S741

↓ Yes

The terminal device selects an RO from the resource #1 to send a preamble — S750

FIG. 7

800

| Sending unit | 810 |
| Processing unit | 820 |
| Receiving unit | 830 |

FIG. 8

900

| Processor 910 | Transceiver 930 |

Memory 920

FIG. 9

## INTERNATIONAL SEARCH REPORT

| International application No. |
| --- |
| **PCT/CN2022/126469** |

### A. CLASSIFICATION OF SUBJECT MATTER

H04W 74/08(2009.01)i

According to International Patent Classification (IPC) or to both national classification and IPC

### B. FIELDS SEARCHED

Minimum documentation searched (classification system followed by classification symbols)

H04W; H04L; H04Q

Documentation searched other than minimum documentation to the extent that such documents are included in the fields searched

Electronic data base consulted during the international search (name of data base and, where practicable, search terms used)

EPODOC, WPI, CNKI, CNPAT, IEEE: 优先级, 顺序, 随机, 接入, 终端, 网络设备, 指示, 资源, 选择, 第二, 特性, 传输, 类型功能, 场景, RA, prior+, resource, random, access, msg3

### C. DOCUMENTS CONSIDERED TO BE RELEVANT

| Category* | Citation of document, with indication, where appropriate, of the relevant passages | Relevant to claim No. |
| --- | --- | --- |
| X | CN 112913319 A (BEIJING XIAOMI MOBILE SOFTWARE CO., LTD.) 04 June 2021 (2021-06-04) description, paragraphs [0068]-[0295] | 1-40 |
| A | CN 113519189 A (OPPO GUANGDONG MOBILE TELECOMMUNICATIONS CO., LTD.) 19 October 2021 (2021-10-19) entire document | 1-40 |
| A | CN 113132970 A (DATANG MOBILE COMMUNICATIONS EQUIPMENT CO., LTD.) 16 July 2021 (2021-07-16) entire document | 1-40 |
| A | US 2020068602 A1 (HUAWEI TECHNOLOGIES CO., LTD.) 27 February 2020 (2020-02-27) entire document | 1-40 |
| A | US 2019215864 A1 (ZTE CORP.) 11 July 2019 (2019-07-11) entire document | 1-40 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **22 November 2022** | **15 December 2022** |

| Name and mailing address of the ISA/CN | Authorized officer |
| --- | --- |
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

| INTERNATIONAL SEARCH REPORT Information on patent family members | | | | International application No. PCT/CN2022/126469 | | | |
|---|---|---|---|---|---|---|---|

| Patent document cited in search report | | | Publication date (day/month/year) | Patent family member(s) | | | Publication date (day/month/year) |
|---|---|---|---|---|---|---|---|
| CN | 112913319 | A | 04 June 2021 | WO | 2022165764 | A1 | 11 August 2022 |
| CN | 113519189 | A | 19 October 2021 | WO | 2021016979 | A1 | 04 February 2021 |
|  |  |  |  | EP | 3996439 | A1 | 11 May 2022 |
|  |  |  |  | US | 2022183005 | A1 | 09 June 2022 |
|  |  |  |  | JP | 2022547256 | A | 11 November 2022 |
| CN | 113132970 | A | 16 July 2021 | None | | | |
| US | 2020068602 | A1 | 27 February 2020 | EP | 3611988 | A1 | 19 February 2020 |
|  |  |  |  | CN | 108811154 | A | 13 November 2018 |
|  |  |  |  | WO | 2018201992 | A1 | 08 November 2018 |
|  |  |  |  | IN | 201917044731 | A | 22 November 2019 |
| US | 2019215864 | A1 | 11 July 2019 | WO | 2017194018 | A1 | 16 November 2017 |
|  |  |  |  | US | 2021168859 | A1 | 03 June 2021 |
|  |  |  |  | CN | 107371273 | A | 21 November 2017 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202111235600

- CN 202210135342